# EUROPEAN PATENT SPECIFICATION

(11) **EP 3 674 187 B1**
(45) Date of publication and mention of the grant of the patent: **04.08.2021**
(21) Application number: 19202700.1
(22) Date of filing: 11.10.2019
(51) Int. Cl.: B62J 9/30, B62J 9/27, B62J 9/24, B62J 9/23, B62J 7/08, B62J 1/28, B62J 17/00

(54) **STORAGE UNIT STRUCTURE FOR SADDLE RIDING VEHICLE**
LAGERUNGSEINHEITSSTRUKTUR FÜR SATTELFAHRZEUG
STRUCTURE D'UNITÉ DE STOCKAGE POUR VÉHICULE À SELLE DU TYPE À ENFOURCHER

(30) Priority: 28.12.2018 JP 2018248282
(43) Date of publication of application: 01.07.2020
(73) Proprietor: HONDA MOTOR CO., LTD, Minato-ku Tokyo 107-8556 (JP)
(72) Inventor: KIKUCHI, Takehiko, Saitama, 351-0193 (JP)
(74) Representative: Weickmann & Weickmann PartmbB

(56) References cited:
- CN-U- 207 598 047
- DE-A1- 4 230 972
- ES-A6- 2 027 155
- US-A1- 2013 168 427

## Description

### [Technical Field]

The present invention relates to a storage unit structure for a saddle riding vehicle.

### [Background Art]

In a storage unit structure for a saddle riding vehicle, in which a box-shaped storage member is removably mounted, a hitherto known device uses a key rotating operation to switch between a locked state and an unlocked state of the storage member with respect to a vehicle body (see, for example, Patent Document 1). In the technique disclosed in Patent Document 1, the key rotating operation also imposes or releases restriction on opening or closing of a lid for the storage member.

### [Prior Art Document]

### [Patent Document]

[Patent Document 1]
JP-T-2013-541458
Patent Application US 2013/0168427 A1 discloses an opening/closing and hooking/releasing mechanism for a suitcase of a motorcycle. The opening/closing means includes a release button provided near a bottom plate of the suitcase. An under-locking ring is rotatable by a key and is operable to bring the mechanism into a locked or a released position. Patent application US 2013/0168427 A1 discloses a storage unit structure according to the preamble of claim 1.

Another prior-art document ES 2 027 155 A6 discloses a locking mechanism for a suitcase of a motorcycle, wherein on rotationally operating a key, a latch immobilizes two levers engaging the cover of the suitcase, thus bringing the cover in a locked state. Rotation of the key in the other direction mobilizes the levers again, thus bringing the mechanism in a released state.

A yet another German patent application DE 4230972 A1 discloses a suitcase for a motor vehicle, having a cover that is kept in the locking position by two pairs of locking bolts. Operating a push button activates a stop provided thereon, which releases these bolts and opens the cover/lid of the suitcase.

### [Summary of the Invention]

### [Problem to be Solved by the Invention]

With the known storage unit structure for a saddle riding vehicle mentioned above, because the locked state of the storage member with respect to the vehicle body and the restriction on opening or closing of the lid for the storage member are simultaneously switched through a single key rotating operation, the restriction on opening or closing of the lid for the storage member cannot be switched solely as required. A possible configuration may, for example, be such that a key operation for the locked state of the storage member with respect to the vehicle body is performed independently of a key operation for the restriction on opening or closing of the lid for the storage member, so that the restriction on opening or closing of the lid for the storage member can be solely performed. This configuration, however, involves a complicated structure.

The present invention has been made in view of the foregoing situation and it is an object of the present invention to achieve, in a storage unit structure for a saddle riding vehicle, a simple structure for solely switching restriction on opening or closing of a lid for a storage member independently of switching a locked state of the storage member.

### [Means for Solving the Problem]

To achieve the foregoing object, the present invention provides a storage unit structure for a saddle riding vehicle, including a box-shaped storage member (52) removably mounted on a side of a vehicle body (50) and a rotary operator (66) that is disposed in the storage member (52) and that is rotationally operated, in which a locked state and an unlocked state of the storage member (52) with respect to the side of the vehicle body (50) are switched through an operation of the rotary operator (66), the storage unit structure including: a lid operator (68) that operates to open or close a lid (61) of the storage member (52); an open/close control mechanism (75) that imposes or releases restriction on opening or closing of the lid (61) by the lid operator (68); and an open/close control mechanism operation restriction portion (85) that imposes or releases restriction on the operation of the open/close control mechanism (75). In the storage unit structure, a state of restriction on the open/close control mechanism (75) by the open/close control mechanism operation restriction portion (85) is switched in response to an operation of the rotary operator (66).

In the foregoing configuration, preferably, when the storage member (52) is in the locked state through an operation of the rotary operator (66), the open/close control mechanism operation restriction portion (85) restricts an operation of the open/close control mechanism (75), and, when the storage member (52) is in the unlocked state through an operation of the rotary operator (66), the open/close control mechanism operation restriction portion (85) releases restriction on the operation of the open/close control mechanism (75).

In the present invention, the open/close control mechanism (75) includes an operating knob (75) that is rotationally operated, the operating knob (75) includes a lid operation restriction portion (78) that restricts an operation by the lid operator (68), and the rotational operation of the operating knob (75) is restricted by a stopper portion (79) provided in the operating knob (75) abutting on the open/close control mechanism operation restriction portion (85).

In the foregoing configuration, preferably, the open/close control mechanism operation restriction portion (85) is a first link mechanism (85) that extends from the rotary operator (66), and the first link mechanism (85) moves with an operation of the rotary operator (66) to impose or release restriction on an operation of the open/close control mechanism (75).

In the foregoing configuration, preferably, the first link mechanism (85) extends from the rotary operator (66) superiorly toward the open/close control mechanism (75).

In the foregoing configuration, preferably, the storage unit structure further includes a fixing operator (67) that operates for fixing of the storage member (52) with respect to the side of the vehicle body (50) and for releasing the fixing of the storage member (52) with respect to the side of the vehicle body (50), restriction on an operation of the fixing operator (67) being imposed in the locked state and the restriction on the operation of the fixing operator (67) being released in the unlocked state; and a second link mechanism (86) that extends from the rotary operator (66), the second link mechanism (86) moving through an operation of the rotary operator (66). In the storage unit structure, the second link mechanism (86) imposes restriction on an operation of the fixing operator (67) in the locked state and the second link mechanism (86) leaves the fixing operator (67) to release the restriction on the operation of the fixing operator (67) in the unlocked state.

In the foregoing configuration, preferably, the second link mechanism (86) extends from the rotary operator (66) in a vehicle width direction toward the fixing operator (67).

In the foregoing configuration, preferably, the storage unit structure further includes: an engagement member (73) that engages an engaged portion (61a) of the lid (61) to maintain the lid (61) in a closed position; and a link member (72) connected with the engagement member (73) and disposed to be movable in the vehicle width direction. In the storage unit structure, when the link member (72) is moved through an operation of the lid operator (68), the engagement member (73) moves to release engagement between the engaged portion (61a) and the engagement member (73).

In the foregoing configuration, preferably, the storage member (52) includes a case (60) and the lid (61) that closes an opening in an upper surface of the case (60), and the engagement member (73) is disposed on a side of the case (60) and at least a part of the engagement member (73) is housed in the case (60).

In the foregoing configuration, preferably, the engagement member (73) is urged by an urging member (74) in a direction in which the engagement member (73) engages the engaged portion (61a), the lid operator (68) depresses the link member (72) via a depression portion (68b) to resist an urging force of the urging member (74) and move the engagement member (73) via the link member (72), and the link member (72) has a clearance portion (72c) to clear the depression portion (68b) that moves when the engaged portion (61a) is engaged by the engagement member (73) and the lid (61) is closed.

In the foregoing configuration, preferably, the open/close control mechanism (75) includes a movement restriction portion (79b) that can engage the link member (72), and, under a condition in which restriction on opening or closing of the lid (61) by the lid operator (68) is released, the open/close control mechanism (75) is spaced away from the link member (72) and, under a condition in which the restriction on the opening or closing of the lid (61) by the lid operator (68) is imposed, the movement restriction portion (79b) engages the link member (72) to restrict movement of the link member (72).

In the foregoing configuration, preferably, the storage unit structure further includes a backrest (92) for a passenger, disposed on a front surface (60a) of the storage member (52). In the storage unit structure, the backrest (92) has an airflow path (93) that allows air to flow through an inside of the backrest (92).

### [Effects of the Invention]

The storage unit structure for a saddle riding vehicle includes the box-shaped storage member that is removably mounted on the vehicle body side and the rotary operator that is disposed in the storage member and that is rotationally operated. The locked state and the unlocked state of the storage member with respect to the vehicle body side are switched through the operation of the rotary operator. The storage unit structure includes: the lid operator that operates to open or close the lid of the storage member; the open/close control mechanism that imposes or releases the restriction on the opening or closing of the lid by the lid operator; and the open/close control mechanism operation restriction portion that imposes or releases restriction on the operation of the operating knob. The state of restriction on the operation of the open/close control mechanism by the open/close control mechanism operation restriction portion is switched in response to the operation of the rotary operator.

Through the foregoing configuration, under a condition in which the restriction on the operation of the open/close control mechanism by the open/close control mechanism operation restriction portion is released through the operation of the rotary operator, operating the open/close control mechanism allows the restriction on the opening or closing of the lid by the lid operator to be set to be either imposed or released. Thus, only the restriction on the opening or closing of the lid can be switched independently of switching of the locked state of the storage member with respect to the vehicle body side through the operation of the rotary operator. Under a condition in which the restriction on the opening or closing of the lid by the lid operator is released, the lid can be opened or closed without an operation of the rotary operator, which facilitates the operation to open or close the lid. Additionally, the state of restriction on the open/close control mechanism by the open/close control mechanism operation restriction portion is switched in response to the operation of the rotary operator. This, for example, eliminates the need for a rotary operator dedicated to switching of the state of restriction on the open/close control mechanism. This contributes to a simplified structure.

In the foregoing configuration, when the storage member is in the locked state through the operation of the rotary operator, the open/close control mechanism operation restriction portion may restrict the operation of the open/close control mechanism. When the storage member is in the unlocked state through the operation of the rotary operator, the open/close control mechanism operation restriction portion may release the restriction on the operation of the open/close control mechanism.

Through the foregoing configuration, the operation of the open/close control mechanism is restricted when the storage member is in the locked state and the restriction on the operation of the open/close control mechanism is released when the storage member is in the unlocked state. The user can intuitively operate the locked state of the storage member and the open/close control mechanism and gains operability. In the present invention, the open/close control mechanism includes the operating knob that is rotationally operated, the operating knob includes the lid operation restriction portion that restricts the operation by the lid operator, and the rotational operation of the operating knob is restricted by the stopper portion provided in the operating knob abutting on the open/close control mechanism operation restriction portion.

Through the foregoing configuration, the opening or closing of the lid by the lid operator can be restricted by a simple structure of the lid operation restriction portion of the rotationally operated operating knob. Additionally, the rotational operation of the operating knob can be restricted by a simple structure of the open/close control mechanism operation restriction portion being brought into abutment with the stopper portion of the operating knob.

In the foregoing configuration, the open/close control mechanism operation restriction portion may be the first link mechanism that extends from the rotary operator, and the first link mechanism may move with an operation of the rotary operator to thereby impose or release restriction on the operation of the open/close control mechanism.

Through the foregoing configuration, the restriction on the operation of the open/close control mechanism can be imposed or released by a simple structure of the first link mechanism that moves with the operation of the rotary operator.

Additionally, in the foregoing configuration, the first link mechanism may extend from the rotary operator superiorly toward the open/close control mechanism.

Through the foregoing configuration, the first link mechanism can be compactly provided.

In addition, in the foregoing configuration, the storage unit structure may further include: the fixing operator that operates for fixing of the storage member with respect to the vehicle body side and for releasing the fixing of the storage member with respect to the vehicle body side, restriction on the operation of the fixing operator being imposed in the locked state and the restriction on the operation of the fixing operator being released in the unlocked state; and the second link mechanism that extends from the rotary operator, the second link mechanism moving through the operation of the rotary operator. The second link mechanism may impose restriction on the operation of the fixing operator in the locked state and may leave the fixing operator to thereby release the restriction on the operation of the fixing operator in the unlocked state.

Through the foregoing configuration, the restriction on the operation of the fixing operator can be imposed or released by a simple structure of the second link mechanism that moves through the operation of the rotary operator.

In the foregoing configuration, the second link mechanism may extend from the rotary operator in the vehicle width direction toward the fixing operator.

Through the foregoing configuration, the second link mechanism can be compactly provided.

In the foregoing configuration, the storage unit structure may further include the engagement member that engages the engaged portion of the lid to thereby maintain the lid in a closed position; and the link member connected with the engagement member and disposed to be movable in the vehicle width direction. When the link member is moved through the operation of the lid operator, the engagement member may move to thereby release the engagement between the engaged portion and the engagement member.

Through the foregoing configuration, the link member is moved by the operation of the lid operator, which moves the engagement member to thereby release the engagement between the engaged portion of the lid and the engagement member. Thus, the lid can be operated to be opened or closed through a simple structure.

In the foregoing configuration, the storage member includes the case and the lid that closes the opening in the upper surface of the case, and the engagement member is disposed on the side of the case and at least a part of the engagement member is housed in the case.

Through the foregoing configuration, because at least a part of the engagement member is housed in the case, the engagement member can be prevented from protruding toward the lid side, which enhances ease of use of the storage member.

In the foregoing configuration, the engagement member may be urged by the urging member in the direction in which the engagement member engages the engaged portion, the lid operator may depress the link member via the depression portion to thereby resist the urging force of the urging member and move the engagement member via the link member, and the link member may have the clearance portion to clear the depression portion that moves when the engaged portion is engaged by the engagement member and the lid is closed.

Through the foregoing configuration, the clearance portion of the link member can clear the engaged portion that is moved when the engaged portion is engaged by the engagement member and the lid is closed, so that the movement of the link member operatively associated with the engagement member is not transmitted to the lid operator. Thus, the lid can be closed even with a small force.

In the foregoing configuration, the open/close control mechanism may include the movement restriction portion that can engage the link member, and, under a condition in which restriction on opening or closing of the lid by the lid operator is released, the open/close control mechanism may be spaced away from the link member and, under a condition in which the restriction on the opening or closing of the lid by the lid operator is imposed, the movement restriction portion may engage the link member to thereby restrict movement of the link member.

Through the foregoing configuration, under the condition in which the restriction on the opening or closing of the lid by the lid operator is imposed by the open/close control mechanism, the movement restriction portion engages the link member and the movement of the link member is restricted, so that the movement of the engagement member is also restricted and the lid cannot be closed. Thus, under the condition in which the restriction on the opening or closing of the lid by the lid operator is imposed by the open/close control mechanism, the lid can be prevented from being closed.

Additionally, in the foregoing configuration, the backrest for a passenger may be disposed on the front surface of the storage member. The backrest may have the airflow path that allows air to flow through the inside of the backrest.

Through the foregoing configuration, the air can smoothly flow through the area around the backrest, so that riding performance of a motorcycle can be enhanced.

### [Brief Description of the Drawings]

[Fig. 1]

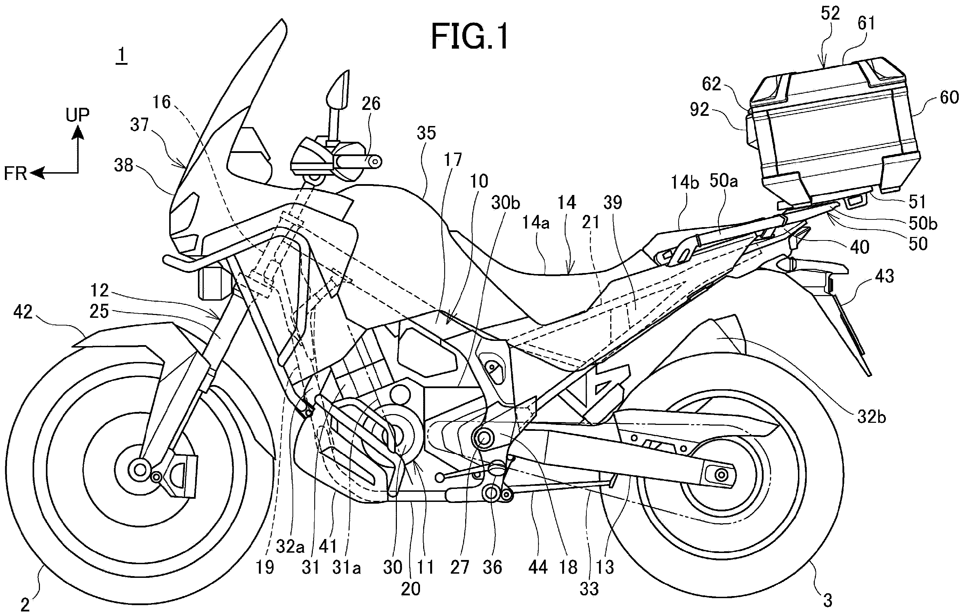

   Fig. 1 is a left side elevation view of a motorcycle according to an embodiment of the present invention.
[Fig. 2]

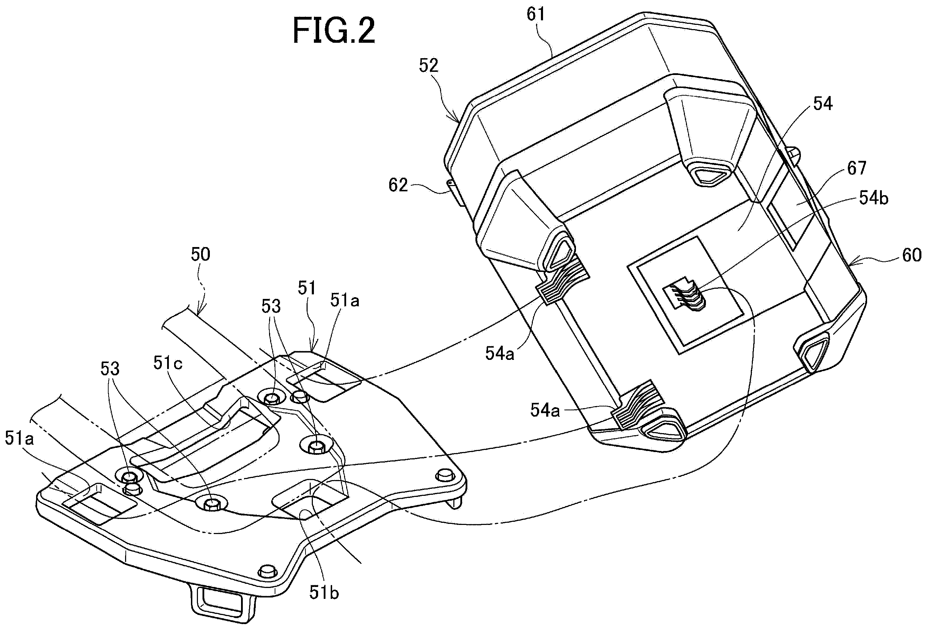

   Fig. 2 is a perspective view illustrating mounting of a storage member with respect to a mounting base.
[Fig. 3]

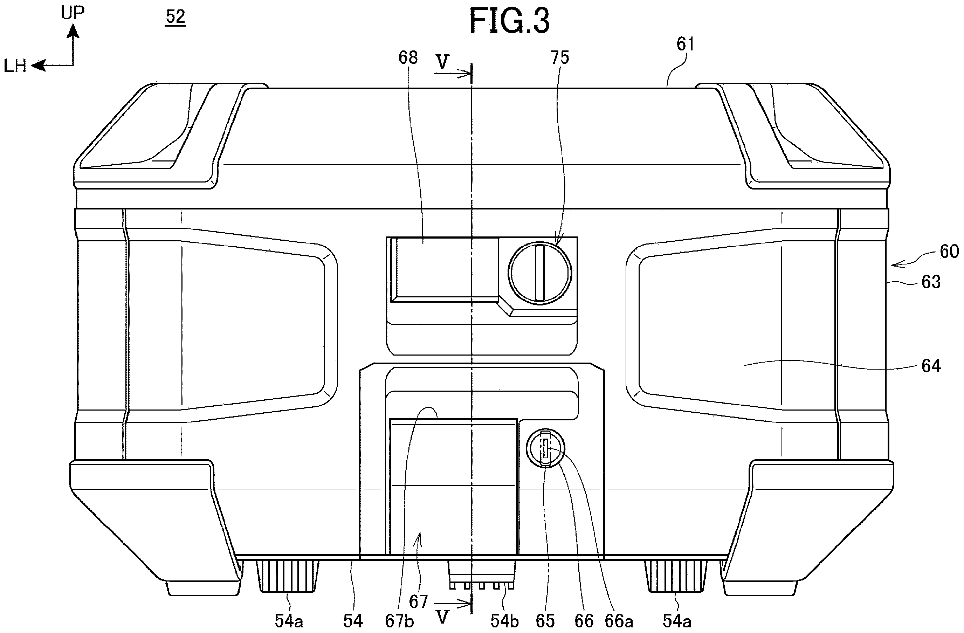

   Fig. 3 is a front elevation view of the storage member, as viewed from a posterior side.
[Fig. 4]

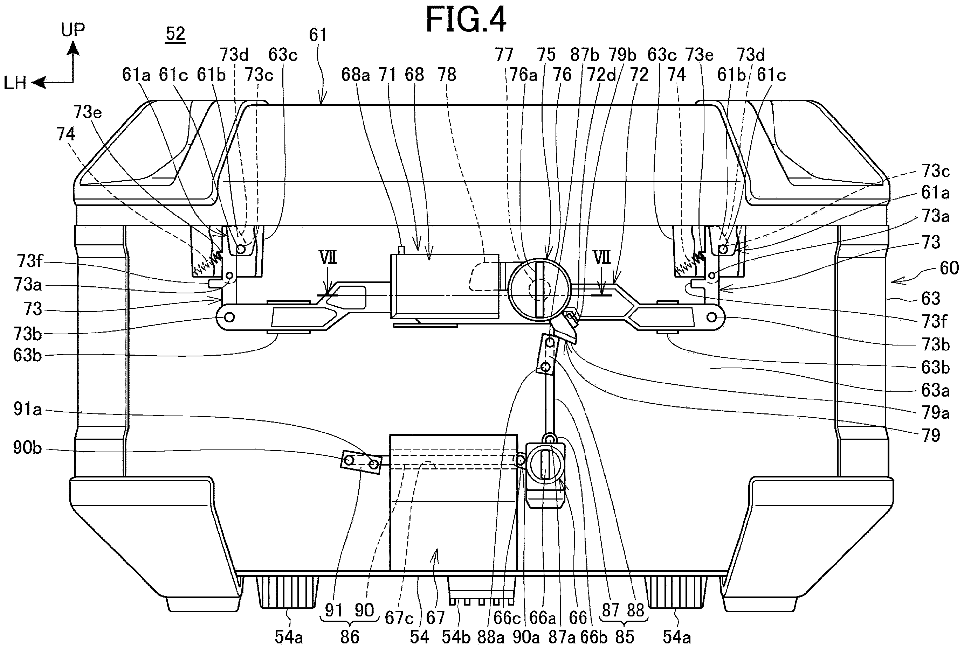

   Fig. 4 is a front elevation view of an internal structure of a rear surface portion of a case.
[Fig. 5]

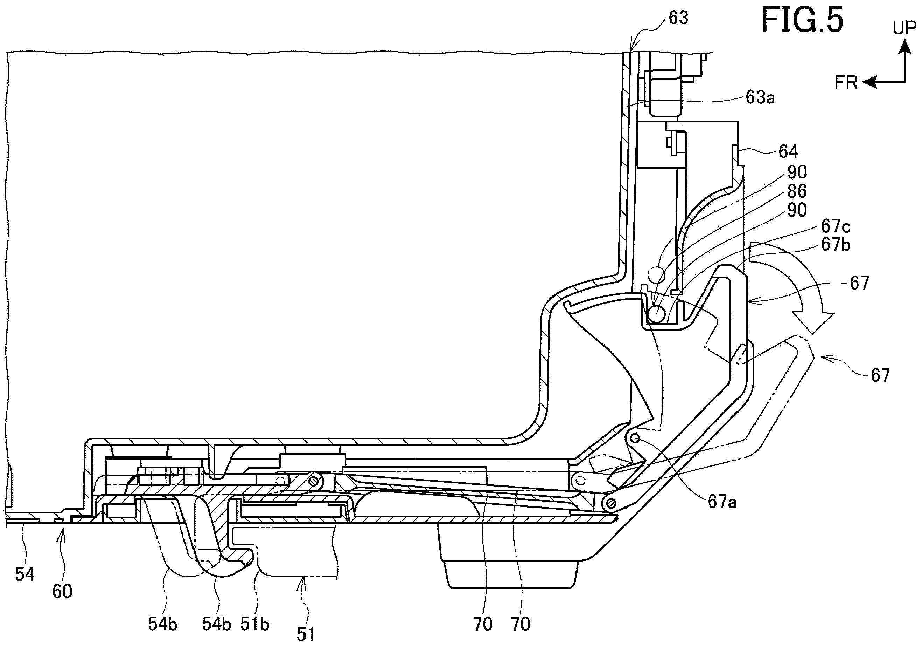

   Fig. 5 is a cross-sectional view taken along line V-V in Fig. 3.
[Fig. 6]

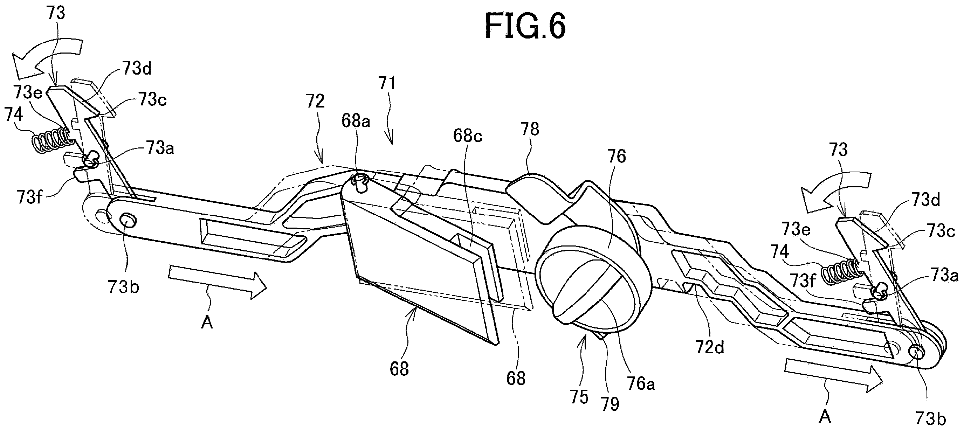

   Fig. 6 is a perspective view of a lid open/close mechanism, as viewed from a posterior side.
[Fig. 7]

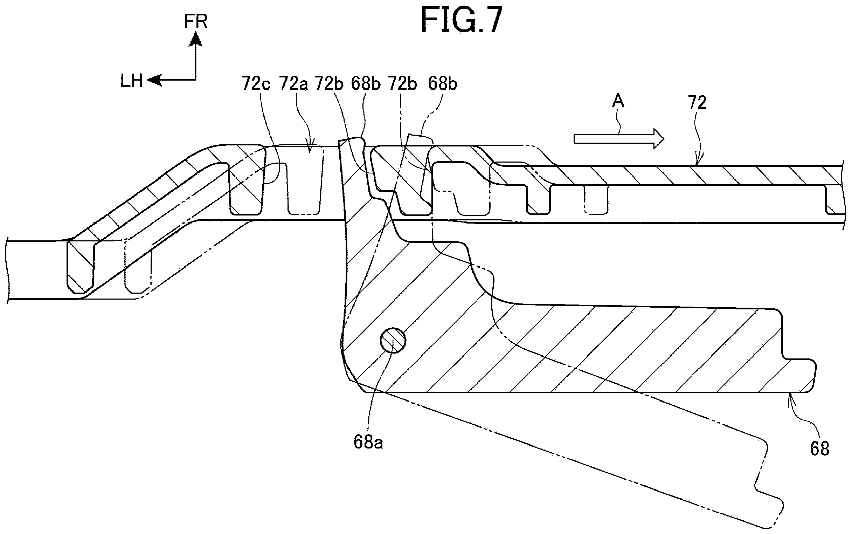

   Fig. 7 is a cross-sectional view taken along line VII-VII in Fig. 4.
[Fig. 8]

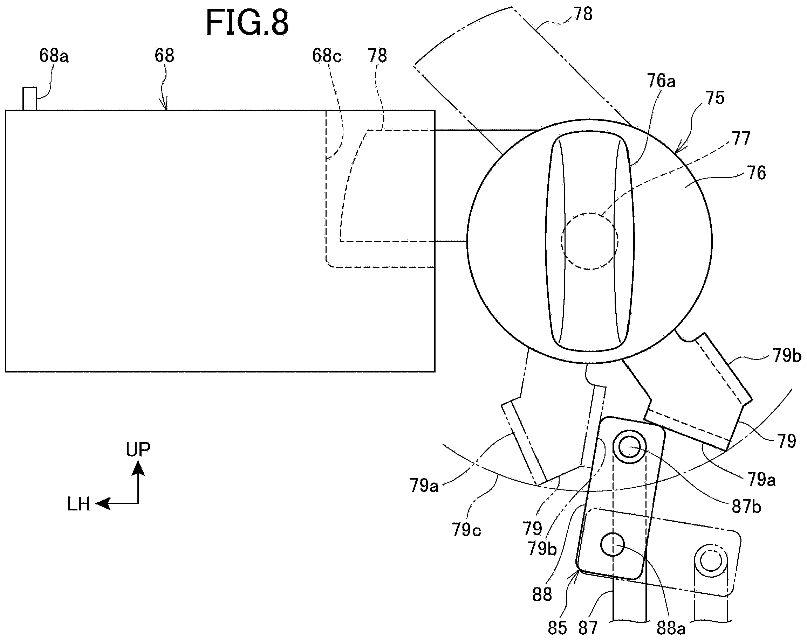

   Fig. 8 is a front elevation view of a structure of an operating knob and components therearound, as viewed from a posterior side.
[Fig. 9]

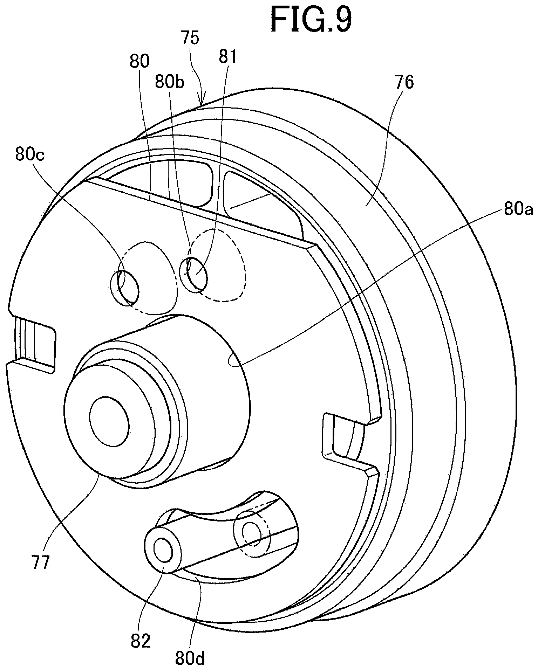

   Fig. 9 is a perspective view of the operating knob, as viewed from an anterior side.
[Fig. 10]

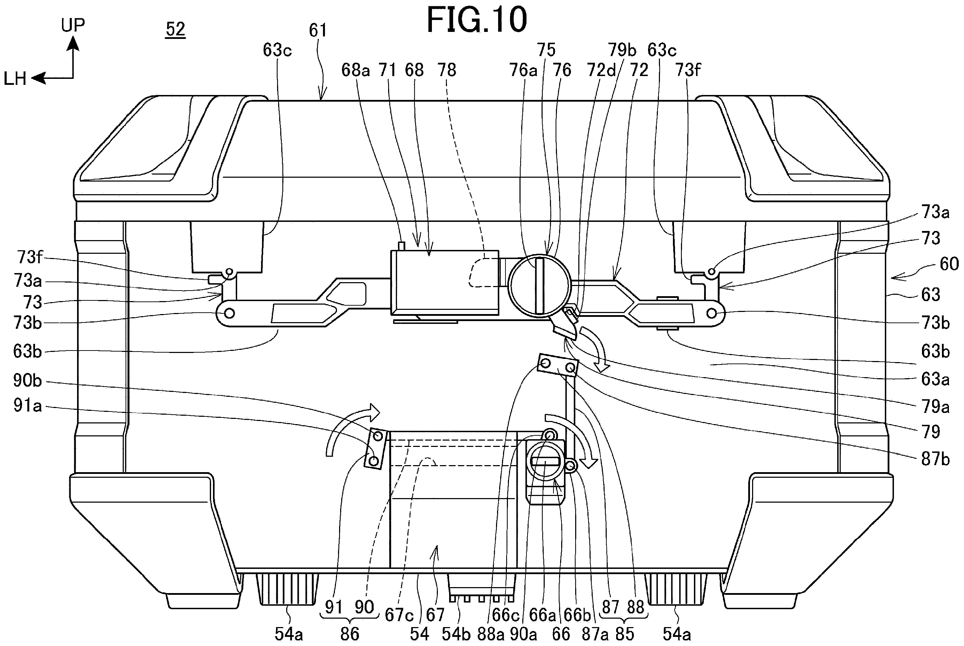

   Fig. 10 is a front elevation view of a condition of a key cylinder operated from a state depicted in Fig. 4 into an "unlocked state."
[Fig. 11]

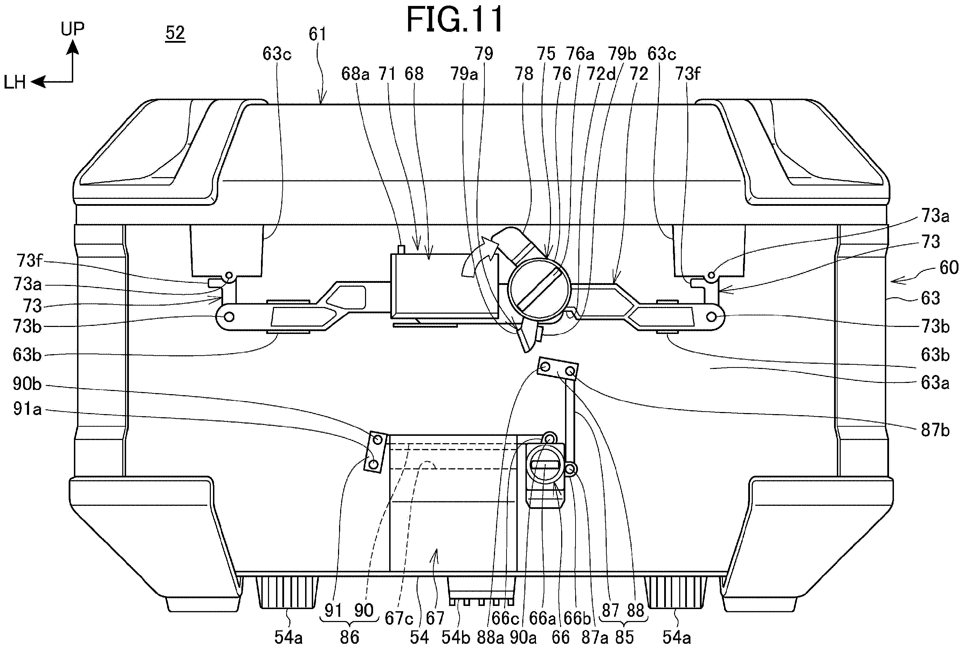

   Fig. 11 is a front elevation view of a condition, in which the operating knob is rotated from a state depicted in Fig. 10 in a direction in which restriction of an operation of a lid operator is released.
[Fig. 12]

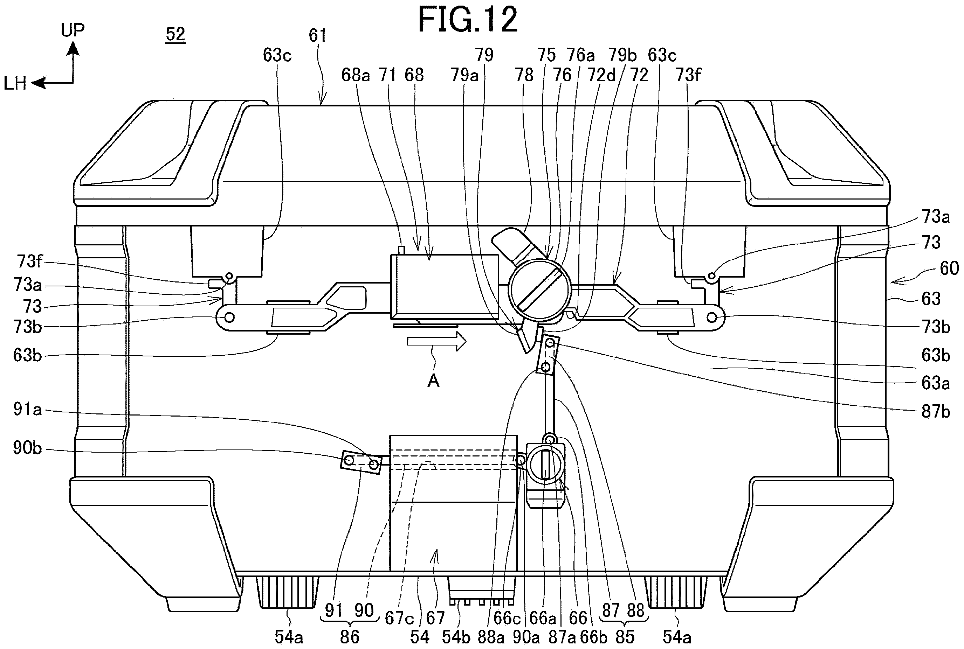

   Fig. 12 is a front elevation view of a "locked state" as switched from a state depicted in Fig. 11.
[Fig. 13]

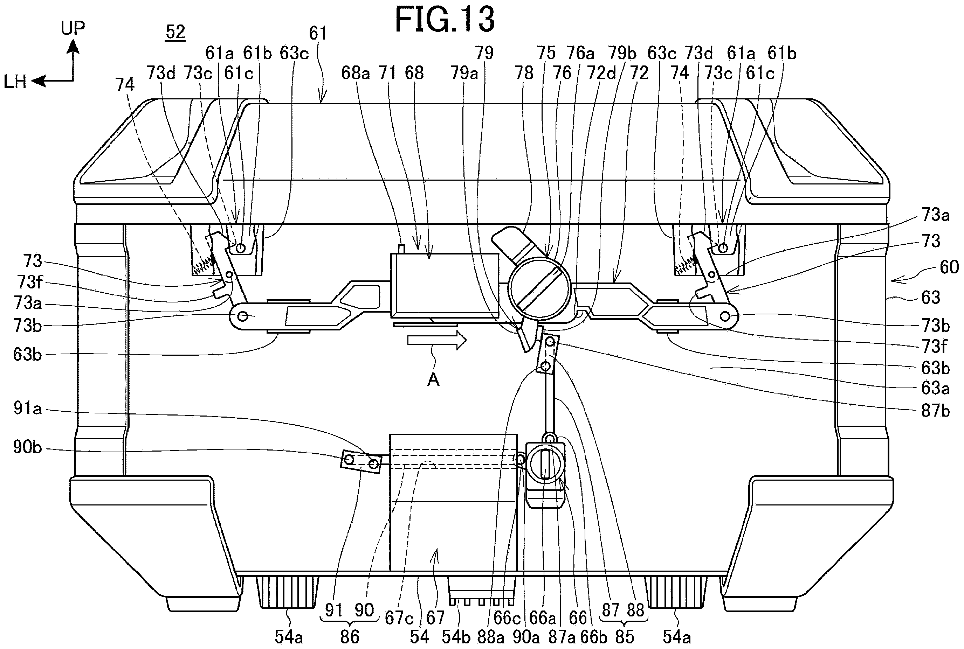

   Fig. 13 is a front elevation view of a condition, in which the lid operator is operated under the condition depicted in Fig. 12.
[Fig. 14]

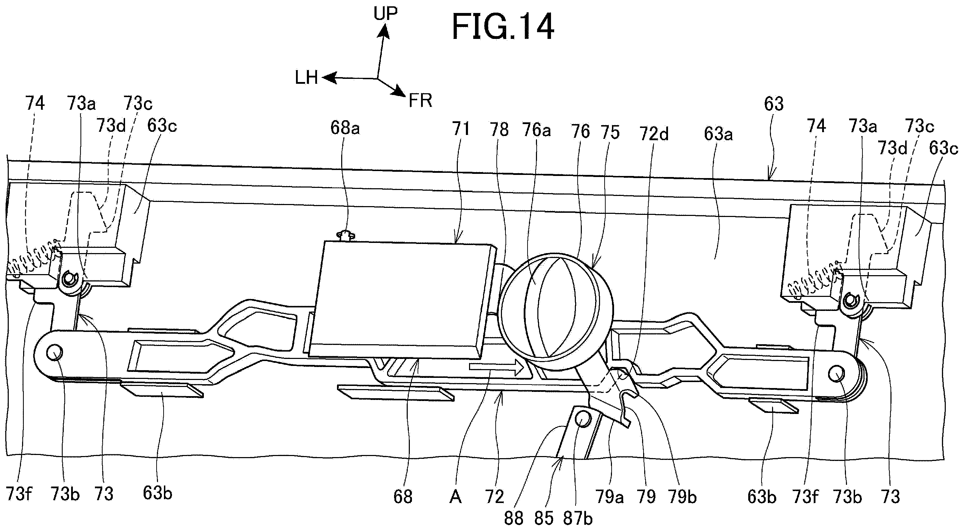

   Fig. 14 is a perspective view of the lid open/close mechanism, the operating knob, a first link mechanism, and components therearound, as viewed from a posterior side.
[Fig. 15]

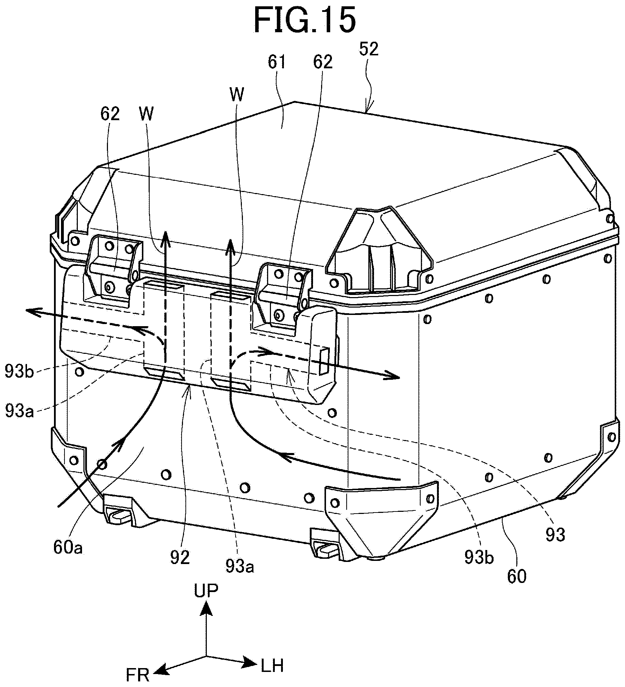

   Fig. 15 is a perspective view of the storage member, as viewed from an anterior side.
[Fig. 16]

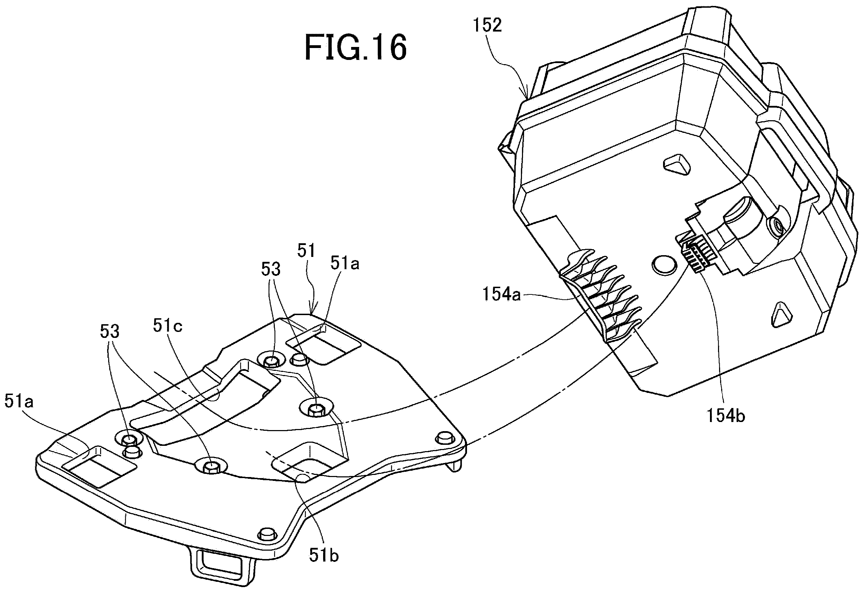

   Fig. 16 is a perspective view of the mounting base and a second storage member.

### [Mode for Carrying out the Invention]

A specific embodiment to which the present invention is applied will be described below with reference to the accompanying drawings. Throughout the descriptions given hereunder, expressions indicating directions including front and rear, right and left, and upper and lower mean the same directions as those with respect to a vehicle body unless otherwise specified. In the drawings, a symbol FR indicates an anterior direction of the vehicle body, a symbol UP indicates a superior direction of the vehicle body, and a symbol LH indicates a leftward direction of the vehicle body.

Fig. 1 is a left side elevation view of a motorcycle according to an embodiment of the present invention.

This motorcycle 1 includes an engine 11, a steering system 12, and a swing arm 13. The engine 11 as a power unit is supported on a vehicle body frame 10. The steering system 12 steerably supports a front wheel 2. The steering system 12 is steerably supported at a front end of the vehicle body frame 10. The swing arm 13 supports a rear wheel 3. The swing arm 13 is disposed at a rear portion of the vehicle body frame 10.

The motorcycle 1 is a saddle riding vehicle in which an occupant straddles a seat 14. The seat 14 is disposed at a position superior to the rear portion of the vehicle body frame 10.

The vehicle body frame 10 includes a head pipe 16, a pair of left and right main frames 17, a pair of left and right pivot frames 18, a down frame 19, a pair of left and right lower frames 20, and a pair of left and right seat frames 21.

More specifically, the head pipe 16 is disposed at a front end of the vehicle body frame 10 and located at a center in a vehicle width.

The left and right main frames 17 extend from the head pipe 16 downwardly toward the rear.

The left and right pivot frames 18 extend from rear ends of the main frames 17 downwardly.

The down frame 19, as a single pipe, extends from a position inferior to the main frames 17 in the head pipe 16 downwardly and is located at the center in the vehicle width.

The left and right lower frames 20 branch laterally from a lower end portion of the down frame 19 to extend toward the rear and are connected with lower end portions of the pivot frames 18.

The left and right seat frames 21 extend from upper portions of the pivot frames 18 upwardly toward the rear.

The steering system 12 includes a pair of left and right front forks 25 and a handlebar 26. The front forks 25 are steerable via a steering shaft (not depicted) that is journaled by the head pipe 16. The handlebar 26 is mounted at upper end portions of the front forks 25. The front wheel 2 is journaled at lower end portions of the front forks 25.

The swing arm 13 has a front end portion journaled by a pivot shaft 27, which connects the left and right pivot frames 18 in the vehicle width direction. The swing arm 13 is thereby swung vertically about the pivot shaft 27. The rear wheel 3 is journaled by a rear end portion of the swing arm 13.

The engine 11 is disposed, in a vehicle side view, between the main frames 17 and the lower frames 20 and between the down frame 19 and the pivot frames 18, and is supported on the vehicle body frame 10.

The engine 11 includes a crankcase 30 and a cylinder portion 31. The crankcase 30 supports a crankshaft (not depicted) that extends horizontally in the vehicle width direction (left-right direction). The cylinder portion 31 extends from a front portion of the crankcase 30 upwardly. The cylinder portion 31 has a cylinder axis 31a. The cylinder axis 31a is inclined forwardly relative to a vertical direction.

An intake apparatus (not depicted) of the engine 11 is connected with an intake port in a rear surface of the cylinder portion 31.

An exhaust apparatus of the engine 11 includes an exhaust pipe 32a and a muffler 32b. The exhaust pipe 32a is connected with an exhaust port in a front surface of the cylinder portion 31. The muffler 32b is connected with a downstream end of the exhaust pipe 32a.

The crankcase 30 has a rear portion constituting a transmission case portion 30b. The transmission case portion 30b houses a transmission. An output from the engine 11 is transmitted from the transmission to the rear wheel 3 via a drive chain 33, which connects an output shaft of the transmission with the rear wheel 3.

The seat 14 is supported on the seat frames 21 from below. The seat 14 integrates a front seat 14a, in which a rider sits, with a rear seat 14b, in which a passenger sits.

A fuel tank 35 is disposed between the head pipe 16 and the seat 14 and supported on the main frames 17 at a position superior to the engine 11.

A pair of left and right steps 36, on which the rider rests his or her feet, is disposed at lower end portions of the pivot frames 18.

The motorcycle 1 includes a vehicle body cover 37. The vehicle body cover 37 covers the vehicle body including the vehicle body frame 10 and the engine 11 or the like. The vehicle body cover 37 includes a front cover 38, a rear side cover 39, a tail cover 40, and an under cover 41. The front cover 38 covers the head pipe 16 and an upper portion of the steering system 12 from front and sides. The rear side cover 39 covers the seat frames 21 at a position inferior to the seat 14. The tail cover 40 covers a posterior portion of the seat 14 from above. The under cover 41 covers a lower portion of the engine 11 from front.

Additionally, the motorcycle 1 includes a front fender 42, a rear fender 43, and a stand 44. The front fender 42 covers the front wheel 2 from above. The rear fender 43 covers the rear wheel 3 from above.

The motorcycle 1 includes a rear carrier 50, which is disposed at a position posterior to the seat 14. packages or the like can be loaded in the rear carrier 50.

The rear carrier 50 is fixed to the seat frames 21.

The rear carrier 50 integrates a pair of left and right grab rail portions 50a with a carrier deck portion 50b. The passenger or the like in the rear seat 14b can hold onto the grab rail portions 50a. The carrier deck portion 50b connects laterally rear portions of the left and right grab rail portions 50a. The rear carrier 50 is fixed to the vehicle body frame 10 and forms part of the vehicle body.

A plate-shaped mounting base 51 is fixed to an upper surface of the carrier deck portion 50b. The mounting base 51 is inclined upwardly toward the rear in a vehicle side view.

A storage member 52 has a box shape in which packages or the like can be stored. The storage member 52 is removably mounted on an upper surface of the mounting base 51. Specifically, the storage member 52 is mounted on the rear carrier 50, which constitutes a vehicle body side, via the mounting base 51.

Fig. 2 is a perspective view illustrating mounting of the storage member 52 with respect to the mounting base 51.

The mounting base 51 is fastened to the carrier deck portion 50b by a plurality of fastening members 53, which are passed through the mounting base 51 from above.

The mounting base 51 has a pair of left and right front portion engagement holes 51a in both lateral end portions at a front portion on the upper surface of the mounting base 51. The storage member 52 has a lower portion engaging with the front portion engagement holes 51a. The mounting base 51 has a rear portion engagement hole 51b at a central portion in the vehicle width direction in the rear portion of the upper surface of the mounting base 51. The storage member 52 has the lower portion engaging with the rear portion engagement hole 51b. The mounting base 51 further has a central engagement hole 51c at the central portion in the vehicle width direction in the front portion of the upper surface of the mounting base 51.

The storage member 52 includes a pair of left and right claw-shaped engagement portions 54a at the front portion of a lower surface 54 of the storage member 52. The engagement portions 54a protrude anteriorly.

The storage member 52 includes a movable engagement portion 54b at a central portion in the vehicle width direction in the lower surface 54 of the storage member 52. The movable engagement portion 54b protrudes posteriorly. The movable engagement portion 54b is located posterior to the engagement portions 54a and is slidable in a vehicle fore-aft direction.

The storage member 52 is placed on the upper surface of the mounting base 51 and fixed to the mounting base 51 by the engagement portions 54a engaging the respective front portion engagement holes 51a and the movable engagement portion 54b engaging the rear portion engagement hole 51b.

Fig. 3 is a front elevation view of the storage member 52, as viewed from a posterior side.

Reference is made to Figs. 1 to 3. The storage member 52 includes a box-shaped case 60 and a lid 61. The case 60 has an upper surface generally opening. The lid 61 closes the opening in the upper surface of the case 60.

The lid 61 has a front end portion connected with the case 60 via a hinge portion 62, which is disposed at an upper end portion of a front wall portion of the case 60. The lid 61 is rotated to front or rear about the hinge portion 62 to thereby be opened or closed. Opening the lid 61 exposes a storage space inside the case 60.

Fig. 4 is a front elevation view of an internal structure of a rear surface portion of the case 60.

Reference is made to Figs. 3 and 4. The case 60 includes a case main body 63 and a rear surface cover 64. The case main body 63 includes the storage space. The rear surface cover 64 covers a rear surface 63a of the case main body 63 from the rear. Fig. 4 depicts a condition, in which the rear surface cover 64 depicted in Fig. 3 has been removed.

A key cylinder 66 and a fixing operator 67 are disposed on the rear surface portion of the case 60. The key cylinder 66 is a rotary operator that is rotationally operated by a key 65. The fixing operator 67 operates for fixing of the storage member 52 with respect to the mounting base 51 and for releasing the fixing of the storage member 52 with respect to the mounting base 51.

Additionally, a lid operator 68 and an operating knob 75 are disposed on the rear surface portion of the case 60. The lid operator 68 operates to open or close the lid 61. The operating knob 75 is an open/close control mechanism that imposes or releases restriction on opening or closing of the lid 61 by the lid operator 68.

The key cylinder 66, the fixing operator 67, the lid operator 68, and the operating knob 75 are disposed to be exposed on the rear surface cover 64.

Fig. 5 is a cross-sectional view taken along line V-V in Fig. 3. With the rear surface cover 64, Fig. 5 depicts only a lower portion thereof.

Reference is made to Figs. 2 to 5. The fixing operator 67 is an operating lever that operates the movable engagement portion 54b of the lower surface 54. The fixing operator 67 is disposed at a central portion in the vehicle width at the lower portion of the rear surface portion of the case 60.

The fixing operator 67 is supported in the rear surface portion of the case 60 by a shaft portion 67a, which extends in the vehicle width direction (left-right direction). The shaft portion 67a is disposed at a lower portion of the fixing operator 67. The fixing operator 67 is rotatable in a vertical direction about the shaft portion 67a.

The fixing operator 67 includes a holding portion 67b at an upper portion thereof. The holding portion 67b is held by a user during operation. The fixing operator 67 further has an engagement recessed portion 67c at a portion anterior to the holding portion 67b in an upper surface portion of the fixing operator 67. The engagement recessed portion 67c is recessed inferiorly.

The engagement recessed portion 67c is located inside the rear surface cover 64 and inferior to an upper end of the holding portion 67b. The engagement recessed portion 67c has a groove shape extending in the vehicle width direction.

The fixing operator 67 is connected with the movable engagement portion 54b via a connection rod 70. The connection rod 70 extends in the vehicle fore-aft direction through a path at the lower portion of the case 60. The connection rod 70 has a rear end connected with a lower end portion of the fixing operator 67 at a position inferior to the shaft portion 67a. The connection rod 70 has a front end connected with a rear portion of the movable engagement portion 54b.

Reference is made to Figs. 2 and 5. Under a condition in which the fixing operator 67 is stored in the rear surface portion of the case 60, the movable engagement portion 54b engages a rear edge portion of the rear portion engagement hole 51b in the mounting base 51, so that the case 60 is fixed to the mounting base 51.

As indicated by the imaginary line in Fig. 5, when the fixing operator 67 is operated to be rotated posteriorly, the movable engagement portion 54b is pushed by the connection rod 70 to thereby move anteriorly. Under this condition, the movable engagement portion 54b is apart anteriorly from the rear edge portion of the rear portion engagement hole 51b in the mounting base 51, so that fixing of the case 60 to the mounting base 51 by the movable engagement portion 54b is released.

Specifically, the fixing operator 67 operates for fixing of the storage member 52 with respect to the mounting base 51 and for releasing the fixing of the storage member 52 with respect to the mounting base 51. Under the condition in which the fixing operator 67 is operated for releasing the fixing, the storage member 52 can be pulled up and removed from the mounting base 51.

Reference is made to Fig. 4. A lid open/close mechanism 71 for opening or closing the lid 61 is disposed at an upper portion of the rear surface portion of the storage member 52.

The lid open/close mechanism 71 includes the lid operator 68, a link member 72, a pair of left and right engagement members 73, a pair of left and right urging members 74, and a pair of left and right engaged portions 61a. The link member 72 is moved in the vehicle width direction through an operation of the lid operator 68. The engagement members 73 are connected with the link member 72. The urging members 74 urge the engagement members 73. The engaged portions 61a are disposed in the lid 61.

Fig. 6 is a perspective view of the lid open/close mechanism 71, as viewed from a posterior side. Fig. 7 is a cross-sectional view taken along line VII-VII in Fig. 4.

Reference is made to Figs. 4, 6, and 7. The lid operator 68 is disposed at a central portion in the vehicle width direction at the upper portion of the rear surface portion of the case 60. The lid operator 68 is located superior to the fixing operator 67.

The lid operator 68 is supported on the rear surface portion of the case 60 by a shaft portion 68a, which extends in the vertical direction. The shaft portion 68a is disposed at a first end portion (left end portion) in the vehicle width direction of the lid operator 68. The lid operator 68 is rotatable in the vehicle width direction about the shaft portion 68a.

The lid operator 68 includes a depression portion 68b at the first end portion in the vehicle width direction. The depression portion 68b has a columnar shape protruding anteriorly. The lid operator 68 further has a recessed portion 68c at a second end portion (right end portion) in the vehicle width direction. The recessed portion 68c is recessed in the vehicle width direction. The recessed portion 68c has a groove shape extending in the vertical direction.

The link member 72 is a bar-shaped member extending in the vehicle width direction. The link member 72 is disposed anterior to the lid operator 68. The lid operator 68 overlaps a central portion in the vehicle width direction of the link member 72 from the rear. The link member 72 extends to a first side and a second side in the vehicle width direction with respect to the lid operator 68.

The link member 72 has an opening 72a at a portion at which the lid operator 68 overlaps. The depression portion 68b of the lid operator 68 is passed through the opening 72a.

The opening 72a has a depressed portion 72b on an inner peripheral surface thereof. The depressed portion 72b is depressed by the depression portion 68b, which moves in the vehicle width direction. Additionally, the opening 72a further has a clearance portion 72c. The clearance portion 72c is formed on an opposite side of the depression portion 68b from the depressed portion 72b. The clearance portion 72c is recessed in the vehicle width direction so as to clear the depression portion 68b.

The case main body 63 has a pair of upper and lower guide walls 63b (Fig. 4). The guide walls 63b protrude posteriorly from the rear surface 63a. The guide walls 63b are also provided in pairs disposed laterally across the lid operator 68.

The link member 72 is supported so as to be sandwiched between the upper and lower guide walls 63b and is movable in the vehicle width direction along the guide walls 63b.

The left and right engagement members 73 are connected with a first end portion and a second end portion in the vehicle width direction, respectively, of the link member 72.

The engagement members 73 each include a rotational shaft 73a at a vertically intermediate portion. The rotational shaft 73a extends in the fore-aft direction. The engagement member 73 is supported on the rear surface portion of the case 60 via the rotational shaft 73a.

The engagement member 73 is rotatably connected with an end portion in the vehicle width direction of the link member 72 via a connection shaft 73b. The connection shaft 73b is disposed at a lower end portion of the engagement member 73. The connection shaft 73b extends in parallel with the rotational shaft 73a.

The engagement member 73 includes a hook portion 73c at an upper end portion thereof. The hook portion 73c protrudes to a second side (right-hand side) in the vehicle width direction. The engagement member 73 further includes an inclined portion 73d. The inclined portion 73d is disposed at an upper edge of the hook portion 73c and has a height decreasing toward a distal end side thereof.

A pair of left and right box-shaped portions 63c is disposed at an upper portion of the rear surface 63a of the case main body 63. The box-shaped portions 63c bulge posteriorly. The box-shaped portions 63c each have a box shape having an upper surface and a lower surface opening in the vertical direction. In Fig. 4, the box-shaped portions 63c are partially cut away to reveal the interior.

The engagement member 73 is passed from below through the box-shaped portion 63c and an upper portion of the engagement member 73 is housed inside the box-shaped portion 63c. The engagement member 73 is housed in the box-shaped portion 63c and located inferior to an upper surface of the case main body 63. Thus, the engagement member 73 does not protrude superiorly from the case main body 63, which enhances ease of use of the storage member 52.

The engagement member 73 further includes a protrusion 73e and a stopper 73f. The protrusion 73e and the stopper 73f are formed at an upper portion of the engagement member 73 on a side opposite from the hook portion 73c.

The urging members 74 are each a coil spring that extends in the vehicle width direction and are each housed in the box-shaped portion 63c. The urging member 74 has a first end supported by the protrusion 73e and a second end supported by an inner surface of a side surface portion of the box-shaped portion 63c.

The stopper 73f is disposed inferior to the protrusion 73e and protrudes in the vehicle width direction. The stopper 73f abuts against a receiver portion (not depicted) disposed near the stopper 73f to thereby restrict a rotational angle of the engagement member 73 to a predetermined angle.

The left and right engaged portions 61a of the lid 61 extend inferiorly from a lower surface of a rear end portion of the lid 61 and engage the engagement members 73.

The engaged portions 61a each include front and rear support walls 61b (the front support wall 61b is not depicted) and an engagement pin 61c. The front and rear support walls 61b are juxtaposed in the fore-aft direction to extend inferiorly from the lower surface of the lid 61. The engagement pin 61c connects lower end portions of the front and rear support walls 61b in the fore-aft direction.

Reference is made to Fig. 4. Under a condition in which the lid 61 is closed, the engaged portion 61a fits from above in the box-shaped portion 63c of the case 60 and the hook portion 73c of the engagement member 73 is placed between the front and rear support walls 61b and engage the engagement pin 61c of the engaged portion 61a.

In the engagement member 73, the urging member 74 urges the hook portion 73c in a direction in which the hook portion 73c engages the engagement pin 61c.

Reference is made to Fig. 6. When the lid operator 68 is rotated posteriorly, the depression portion 68b (Fig. 7) of the lid operator 68 is moved toward the second side (right-hand side) in the vehicle width direction to thereby depress the depressed portion 72b on the inner surface of the opening 72a in the link member 72. The depressed link member 72 is slid toward the second side (right-hand side) in the vehicle width direction as depicted in Fig. 7, so that the engagement members 73, which are connected with the end portions of the link member 72, resist urging forces of the urging members 74 to thereby rotate about the rotational shafts 73a. As a result, the urging members 74 rotate such that the hook portions 73c leave the engagement pins 61c. This releases the engagement between the engagement members 73 and the engaged portions 61a, thus allowing the lid 61 to be opened.

Fig. 8 is a front elevation view of a structure of the operating knob 75 and components therearound, as viewed from a posterior side. Fig. 8 omits depicting the link member 72.

Reference is made to Figs. 4, 6, and 8. The operating knob 75 is an operator that is rotated. The operating knob 75 is disposed beside the recessed portion 68c in the lid operator 68 and posterior to the link member 72. The operating knob 75 is located superior to the key cylinder 66.

The operating knob 75 includes a knob main body 76, a rotational shaft 77, a lid operation restriction portion 78, and a stopper portion 79. The knob main body 76 has a circular shape. The rotational shaft 77 is disposed at a central portion of a front surface of the knob main body 76 and extends in the vehicle fore-aft direction. The lid operation restriction portion 78 extends to the outside in a radial direction of the knob main body 76. The stopper portion 79 extends from a position different from a position, from which the lid operation restriction portion 78 extends, to the outside in the radial direction of the knob main body 76. The lid operation restriction portion 78 and the stopper portion 79 are disposed in a space between the rear surface 63a of the case main body 63 and the rear surface cover 64.

The operating knob 75 is supported by the rear surface cover 64 (Fig. 3) via the rotational shaft 77 and rotatable about the rotational shaft 77.

A pinching portion 76a, which protrudes so as to allow the user to pinch for operation, is disposed on a rear surface of the knob main body 76.

Fig. 9 is a perspective view of the operating knob 75, as viewed from an anterior side. It is noted that Fig. 9 omits depicting the lid operation restriction portion 78 and the stopper portion 79.

A disc-shaped plate 80 is disposed between the knob main body 76 and the rear surface cover 64 (Fig. 3). The plate 80 is fixed onto the rear surface cover 64. The plate 80 has a hole 80a, a pair of engagement holes 80b and 80c, and a position restriction hole 80d. The rotational shaft 77 of the operating knob 75 is passed through the hole 80a. The engagement holes 80b and 80c are spaced apart from each other in a circumferential direction of the operating knob 75. The position restriction hole 80d has a slot shape extending along the circumferential direction of the operating knob 75.

The knob main body 76 includes a ball 81 and a protruding portion 82, which are disposed on a front surface portion thereof. The ball 81 engages from the rear either one of the engagement holes 80b and 80c in the plate 80. The protruding portion 82 is passed through the position restriction hole 80d from the rear.

A rotational range through which the operating knob 75 is rotated is restricted by the protruding portion 82 moving in the circumferential direction through rotation of the operating knob 75 and abutting against an end in the position restriction hole 80d. The rotational range through which the operating knob 75 is rotated is, for example, 45 degrees.

The ball 81 is housed in the hole portion in the front surface portion of the knob main body 76 and is pressed up against the plate 80 by a spring disposed at the hole portion. When the operating knob 75 is rotated up to a predetermined position, an urging force of the spring causes the ball 81 to engage either one of the engagement holes 80b and 80c. This allows the user to hear a click during rotation of the operating knob 75, offering operability for the user.

Reference is made to Figs. 4, 6, and 8. The lid operation restriction portion 78 of the operating knob 75 extends from the side of the knob main body 76 in the vehicle width direction and engages the recessed portion 68c in the lid operator 68. Under the foregoing condition, the lid operation restriction portion 78 of the operating knob 75 abuts on the recessed portion 68c in the lid operator 68, so that the lid operator 68 cannot be rotated from the condition depicted in Figs. 4 and 8 to the posterior side. It is noted that the lid operation restriction portion 78 is required only to abut on the recessed portion 68c to thereby restrict rotation of the lid operator 68 when the lid operator 68 is to be rotated. Specifically, the lid operation restriction portion 78 is not necessarily required to abut on the recessed portion 68c at all times.

Specifically, under the condition depicted in Figs. 4 and 8, the operating knob 75 restricts an open/close operation for the lid 61 by the lid operator 68.

It is noted that, under the condition depicted in Fig. 4, the ball 81 (Fig. 9) of the operating knob 75 engages the engagement hole 80b and the protruding portion 82 of the operating knob 75 abuts against a first end in the position restriction hole 80d.

Fig. 8 depicts, with an imaginary line, a condition in which the restriction of the open/close operation for the lid 61 by the operating knob 75 is released.

As indicated by the imaginary line in Fig. 8, when the operating knob 75 is rotated so as to move the lid operation restriction portion 78 to the outside in the vehicle width direction, the lid operation restriction portion 78 moves out of the recessed portion 68c in the lid operator 68, so that engagement between the lid operation restriction portion 78 and the recessed portion 68c is released. Under this condition, the lid operator 68 can be rotated toward the posterior side from the condition depicted in Fig. 8, so that the user can operate the lid operator 68 to open the lid 61.

Specifically, when the lid operation restriction portion 78 is brought into the condition indicated by the imaginary line in Fig. 8, the restriction on opening or closing of the lid 61 via the lid operator 68 by the operating knob 75 is released. Under this condition, the ball 81 (Fig. 9) of the operating knob 75 engages the engagement hole 80c and the protruding portion 82 of the operating knob 75 abuts against a second end in the position restriction hole 80d.

Reference is made to Fig. 4. The key cylinder 66 is disposed such that a key hole 66a, in which the key 65 is inserted, faces posteriorly. The key cylinder 66 has an axis of a rotational operation by the key 65 extending in the vehicle fore-aft direction. The key cylinder 66 is disposed beside the fixing operator 67 and inferior to the operating knob 75.

The key cylinder 66 includes a first link connection portion 66b and a second link connection portion 66c. The first link connection portion 66b and the second link connection portion 66c are rotated integrally with the key 65, which is inserted in the key hole 66a and operated. The first link connection portion 66b and the second link connection portion 66c are rotated about the axis of the key cylinder 66.

Under the condition depicted in Fig. 4, the first link connection portion 66b extends superiorly relative to the key cylinder 66 and the second link connection portion 66c extends in the vehicle width direction toward the fixing operator 67.

A first link mechanism 85 (open/close control mechanism operation restriction portion) and a second link mechanism 86 are connected with the key cylinder 66. The first link mechanism 85 extends from the key cylinder 66 toward the operating knob 75. The second link mechanism 86 extends from the key cylinder 66 in the vehicle width direction toward the fixing operator 67.

Reference is made to Figs. 4 and 8. The first link mechanism 85 includes a first link rod 87 and a first oscillation link 88. The first link rod 87 extends from the first link connection portion 66b of the key cylinder 66 superiorly. The first oscillation link 88 is connected with an upper end portion of the first link rod 87.

More specifically, the first link rod 87 is a linearly and vertically extending rod. The first link rod 87 has a lower end portion connected with the first link connection portion 66b via a connection shaft 87a, which extends in the fore-aft direction. The first link rod 87 is rotatable about the connection shaft 87a.

The first oscillation link 88 has a plate shape extending vertically. The first oscillation link 88 is shorter in vertical length than the first link rod 87. The first oscillation link 88 has an upper end portion connected with an upper end portion of the first link rod 87 via a connection shaft 87b, which extends in the fore-aft direction. The first oscillation link 88 is rotatable with respect to the first link rod 87 about the connection shaft 87b.

The first oscillation link 88 has a lower end portion connected with the rear surface portion of the case 60 via a case connection shaft 88a, which extends in the fore-aft direction. The case connection shaft 88a is disposed inferior to the connection shaft 87b.

More specifically, the case connection shaft 88a is fixed to an inner surface of the rear surface cover 64 (Fig. 3). The first oscillation link 88 is oscillatable about the case connection shaft 88a.

The stopper portion 79 of the operating knob 75 extends inferiorly with respect to the knob main body 76. The first oscillation link 88 is disposed inferior to the stopper portion 79 and the upper end portion of the first oscillation link 88 is close to the stopper portion 79.

The first link mechanism 85 restricts a rotational operation of the operating knob 75 by the first oscillation link 88 abutting on the stopper portion 79 of the operating knob 75. It is noted that, in this case, the first oscillation link 88 is required only to abut on the stopper portion 79 to thereby restrict rotation of the operating knob 75 when the operating knob 75 is to be rotated. The first oscillation link 88 is not necessarily required to contact the engagement recessed portion 67c at all times.

The stopper portion 79 includes a first abutment portion 79a and a second abutment portion 79b (movement restriction portion). The first abutment portion 79a and the second abutment portion 79b protrude anteriorly from the lower end portion of the stopper portion 79. The second abutment portion 79b is disposed outside the first abutment portion 79a in the vehicle width direction.

Reference is made to Fig. 4. The second link mechanism 86 includes a second link rod 90 and a second oscillation link 91. The second link rod 90 extends from the second link connection portion 66c of the key cylinder 66 in the vehicle width direction. The second oscillation link 91 is connected with an outer end portion in the vehicle width direction of the second link rod 90.

More specifically, the second link rod 90 is a rod that extends linearly and substantially horizontally in the vehicle width direction. The second link rod 90 has an inner end portion in the vehicle width direction connected with the second link connection portion 66c via a connection shaft 90a, which extends in the fore-aft direction. The second link rod 90 is rotatable about the connection shaft 90a.

The second oscillation link 91 has a plate shape extending in the vehicle width direction. The second oscillation link 91 is shorter in length in the vehicle width direction than the second link rod 90. The second oscillation link 91 has an outer end portion in the vehicle width direction connected with the outer end portion in the vehicle width direction of the second link rod 90 via a connection shaft 90b, which extends in the fore-aft direction. The second oscillation link 91 is rotatable with respect to the second link rod 90 about the connection shaft 90b.

The second oscillation link 91 has an inner end portion in the vehicle width direction connected with the rear surface portion of the case 60 via a case connection shaft 91a, which extends in the fore-aft direction. The case connection shaft 91a is disposed inside the connection shaft 90b in the vehicle width direction. More specifically, the case connection shaft 91a is fixed to the inner surface of the rear surface cover 64 (Fig. 3). The second oscillation link 91 is oscillatable about the case connection shaft 91a.

As viewed from the posterior side, the fixing operator 67 has the upper portion overlapping the second link rod 90 from the rear to thereby cover the second link rod 90. The second link rod 90 is located anterior to the upper portion of the fixing operator 67 and extends from the second link connection portion 66c of the key cylinder 66 across the fixing operator 67 in the vehicle width direction before being connected with the second oscillation link 91. The second oscillation link 91 is disposed on the first side in the vehicle width direction with respect to the fixing operator 67. The key cylinder 66 is disposed on the second side in the vehicle width direction with respect to the fixing operator 67.

Reference is made to Figs. 4 and 5. The second link rod 90 is located immediately above the engagement recessed portion 67c in the fixing operator 67 and can engage the engagement recessed portion 67c. The second link rod 90 abuts against the fixing operator 67 via the engagement recessed portion 67c to thereby restrict the operation of the fixing operator 67. It is here noted that the second link rod 90 is required only to abut against the engagement recessed portion 67c to thereby restrict rotation of the operating knob 75 when the fixing operator 67 is to be rotated toward the rear. The second link rod 90 is not necessarily required to be in contact with the engagement recessed portion 67c at all times.

In Fig. 4, the key cylinder 66 is in a "locked state" in which fixing of the storage member 52 with respect to the mounting base 51 of the rear carrier 50 is locked. In the "locked state," the key hole 66a extends substantially vertically.

In the "locked state," the second link rod 90 engages the engagement recessed portion 67c in the fixing operator 67 and thus the operation of the fixing operator 67 is restricted. Specifically, in the "locked state," the user is unable to bring the fixing operator 67 into the state of releasing the fixing and the storage member 52 is maintained in the condition of being fixed to the mounting base 51. The "locked state" represents a state in which the fixing of the storage member 52 with respect to the mounting base 51 is locked through the operation of the key cylinder 66 by the key 65.

When the key cylinder 66 is in the "locked state," the first oscillation link 88 of the first link mechanism 85 is located on a trajectory 79c (Fig. 8) of rotation of the stopper portion 79 during a rotational operation of the operating knob 75, thereby restricting the rotational operation of the operating knob 75.

More specifically, under the condition depicted in Fig. 4, the lid operation restriction portion 78 of the operating knob 75 engages the recessed portion 68c in the lid operator 68, so that an operation to open or close the lid 61 by the lid operator 68 is restricted. In Fig. 4, the first oscillation link 88 is located inside the stopper portion 79 in the vehicle width direction and abuts against the first abutment portion 79a of the stopper portion 79. Thereby, a rotational operation of the operating knob 75 is restricted in the direction in which the restriction on opening or closing of the lid 61 by the lid operator 68 is released.

Fig. 10 is a front elevation view of a condition of the key cylinder 66 operated from the state depicted in Fig. 4 into an "unlocked state."

In Fig. 10, the key cylinder 66 is in the "unlocked state" in which fixing of the storage member 52 with respect to the mounting base 51 of the rear carrier 50 is unlocked. In the "unlocked state," the key cylinder 66 is rotated clockwise by approximately 90 degrees in Fig. 4 by the key 65, so that the key hole 66a extends substantially horizontally. It is noted that, when the key 65 is removed from the key hole 66a, the key cylinder 66 cannot be rotated.

In the "unlocked state" depicted in Fig. 10, the second link connection portion 66c of the key cylinder 66 is rotated clockwise approximately 90 degrees from the condition depicted in Fig. 4 about an axis of the key cylinder 66. This results in the second oscillation link 91 being pulled in the vehicle width direction by the second link rod 90 and being oscillated about the case connection shaft 91a, so that the second link rod 90 moves substantially in parallel superiorly from the condition depicted in Fig. 4. Under the foregoing condition, the second link rod 90 leaves the engagement recessed portion 67c (Fig. 5) in the fixing operator 67 to move superiorly, so that the engagement between the second link rod 90 and the engagement recessed portion 67c is released and the restriction on the operation of the fixing operator 67 is released. The user thus can operate the fixing operator 67 to thereby release the fixing of the storage member 52 with respect to the mounting base 51. The "unlocked state" represents a state in which the fixing of the storage member 52 with respect to the mounting base 51 is unlocked through the operation of the key cylinder 66 by the key 65.

In the "unlocked state" depicted in Fig. 10, the first link connection portion 66b of the key cylinder 66 is rotated clockwise approximately 90 degrees from the condition depicted in Fig. 4 about the axis of the key cylinder 66. This results in the first oscillation link 88 being pulled inferiorly by the first link rod 87 and being oscillated about the case connection shaft 88a, so that the first link rod 87 moves substantially in parallel to the outside in the vehicle width direction and inferiorly from the condition depicted in Fig. 4. Under the foregoing condition, the first oscillation link 88 moves from a position on the trajectory 79c (Fig. 8) of rotation of the stopper portion 79 of the operating knob 75 inferiorly, to be off the trajectory 79c. The operating knob 75 can now be rotated.

Specifically, in the "unlocked state," the restriction of the operation of the operating knob 75 by the first link mechanism 85 is released, so that the user can operate the operating knob 75.

Specifically, the state of restriction on the operation of the operating knob 75 by the first oscillation link 88 is switched so as to be operatively associated with the operation of the key cylinder 66 that switches between the "locked state" and the "unlocked state." The state of restriction on the operation of the operating knob 75 is switched in response to the operation of the key cylinder 66.

In the "unlocked state," the user can operate both the fixing operator 67 and the operating knob 75.

Fig. 11 is a front elevation view of a condition, in which the operating knob 75 is rotated from the state depicted in Fig. 10 in a direction in which restriction of the operation of the lid operator 68 is released.

In Fig. 11, the operating knob 75 is rotated clockwise approximately 45 degrees from the condition depicted in Fig. 10 and the engagement between the lid operation restriction portion 78 of the operating knob 75 and the recessed portion 68c in the lid operator 68 is released. This releases the restriction on the opening or closing of the lid 61 by the lid operator 68, so that the user can operate the lid operator 68 to open the lid 61.

The "unlocked state" is established in the condition depicted in Fig. 11 and the user can operate the fixing operator 67.

Fig. 12 is a front elevation view of the "locked state" as switched from the state depicted in Fig. 11.

In Fig. 12, the key 65 is operated from the condition depicted in Fig. 11 to rotate the key cylinder 66 counterclockwise approximately 90 degrees and the key cylinder 66 is placed in the "locked state." In the "locked state," the user can remove the key 65 from the key cylinder 66.

In the condition depicted in Fig. 12, the first oscillation link 88 of the first link mechanism 85 is located on the trajectory 79c (Fig. 8) of rotation of the stopper portion 79 of the operating knob 75 and the rotational operation of the operating knob 75 is restricted.

More specifically, the first oscillation link 88 is located at a position outside in the vehicle width direction with respect to the stopper portion 79 and abuts against the second abutment portion 79b of the stopper portion 79, so that the rotational operation of the operating knob 75 is restricted in a direction in which the operation to open or close the lid 61 by the lid operator 68 is restricted. Thus, in the condition depicted in Fig. 12, a condition is maintained in which the restriction on the opening or closing of the lid 61 by the lid operator 68 is released, so that the user can operate the lid operator 68 to open the lid 61. Under the condition in which the restriction on the opening or closing of the lid 61 by the lid operator 68 is released as depicted in Fig. 12, the user can open the lid 61 by simply operating the lid operator 68 without the need to operate the key cylinder 66 with the key 65.

In the condition depicted in Fig. 12, because the key cylinder 66 is in the "locked state," the user is unable to operate the fixing operator 67 and the storage member 52 is maintained in a state of being locked onto the vehicle body side.

Specifically, when the storage member 52 is in the condition depicted in Fig. 12, the user can maintain a condition in which fixing of the storage member 52 onto the vehicle body side is locked and can open the lid 61 by simply operating the lid operator 68 without the need to operate the key cylinder 66 with the key 65. Thus, when needing to open or close the lid 61 frequently or when leaving the motorcycle 1 for a brief period of time, the user can open or close the lid 61 without the use of the key 65 by simply placing the storage member 52 in the condition depicted in Fig. 12. Convenience of the storage member 52 is thus enhanced.

When the key 65 functions also as a main key that switches on or off main power of the motorcycle 1, simply operating the lid operator 68 enables the lid 61 to be opened without the need to remove the main key (key 65) from the motorcycle 1. This eliminates the need to remove the main key from the motorcycle 1 before the lid 61 can be opened. Thus, the lid operator 68 can be operated to open the lid 61 even when, for example, the engine 11 is left running.

To make the locking of the lid 61 more rigid, the user can bring the storage member 52 into the condition depicted in Fig. 4. In this case, the user can use the key 65 to place the key cylinder 66 into the "unlocked state" from the condition depicted in Fig. 4 and release the restriction by the operating knob 75 on the opening or closing of the lid 61 before operating the lid operator 68 to open the lid 61.

Fig. 13 is a front elevation view of a condition, in which the lid operator 68 is operated under the condition depicted in Fig. 12.

When the lid operator 68 is operated under the condition depicted in Fig. 12, the depressed portion 72b is pushed in the vehicle width direction by the depression portion 68b (Fig. 7) of the lid operator 68 and the link member 72 slides in the vehicle width direction in a direction indicated by a symbol A. As a result, the left and right engagement members 73 each rotate about the rotational shaft 73a, so that the engagement between the hook portion 73c and the engagement pin 61c of the lid 61 is released and the lid 61 is opened.

When the engagement between the hook portion 73c and the engagement pin 61c is released, the lid 61 is raised superiorly by a reaction force of a sealing member (not depicted) that is disposed between the peripheral edge portion of the upper surface of the case 60 and the lid 61.

Under a condition in which the lid 61 is open, the urging forces of the urging members 74 cause the engagement members 73 and the link member 72 to return to positions depicted in Fig. 12 from positions depicted in Fig. 13.

To bring the lid 61 into a closed position from an open position, the user depresses the lid 61 inferiorly to thereby cause the engagement pins 61c of the lid 61 to engage the hook portions 73c of the engagement members 73. At this time, the engagement pins 61c depress the inclined portions 73d of the hook portions 73c from above, which causes the engagement members 73 to resist the urging forces of the urging members 74 and rotate. Thus, the link member 72, which is connected with the engagement members 73, slides in the vehicle width direction in the direction of the arrow A.

Reference is made to Fig. 7. The opening 72a in the link member 72, through which the depression portion 68b of the lid operator 68 is passed, has the clearance portion 72c on the opposite side of the depression portion 68b from the depressed portion 72b. The clearance portion 72c is recessed in the vehicle width direction so as to clear the depression portion 68b. This configuration allows an inner peripheral surface of the opening 72a to avoid contact with a side surface portion of the depression portion 68b because of a space available from the clearance portion 72c even when the link member 72 is slid in the direction of the arrow A by the force to depress the lid 61 when the lid 61 is to be closed.

Specifically, the force acting from the lid 61 on the engagement members 73 and the link member 72 is not transmitted to the lid operator 68 when the lid 61 is closed because of the presence of the clearance portion 72c. This eliminates the need to thrust the lid operator 68 aside when the lid 61 is to be closed, so that the lid 61 can be closed with a small force.

Fig. 14 is a perspective view of the lid open/close mechanism 71, the operating knob 75, the first link mechanism 85, and components therearound, as viewed from a posterior side.

Fig. 14 depicts a condition, in which the key cylinder 66 is in the "locked state" as in Fig. 4, the operating knob 75 restricts operation of the lid operator 68, and the lid 61 is open.

An engagement portion 72d, which is recessed superiorly, is provided in a lower surface portion of the link member 72 of the lid open/close mechanism 71.

Under a condition in which the operating knob 75 restricts operation of the lid operator 68 as depicted in Fig. 14, the second abutment portion 79b of the stopper portion 79 of the operating knob 75 engages the engagement portion 72d of the link member 72 from below. Thus, the abutment of the stopper portion 79 with respect to the link member 72 restricts a motion of the link member 72 sliding in the vehicle width direction. The second abutment portion 79b serves as a movement restriction portion that restricts the sliding motion of the link member 72.

It is noted that the second abutment portion 79b is required only to abut against the engagement portion 72d to thereby restrict the sliding motion of the link member 72 when the link member 72 is to make the sliding motion and the second abutment portion 79b is not necessarily required to be in contact the engagement portion 72d at all times.

Even when the lid 61 is depressed inferiorly to thereby cause the engagement pins 61c of the lid 61 to be pressed up against the hook portions 73c of the engagement members 73 in order to close the lid 61 from the condition depicted in Fig. 14, the sliding motion of the link member 72 is restricted by the engagement between the second abutment portion 79b and the engagement portion 72d. Thus, the lid 61 can be prevented from being forced into a closed position under the condition in which the operating knob 75 restricts the operation of the lid operator 68 as depicted in Fig. 14.

When, for example, the sliding motion of the link member 72 by the engagement between the second abutment portion 79b and the engagement portion 72d is not restricted, forcing to press down the lid 61 causes the engagement pins 61c to engage the engagement members 73 to thereby close the lid 61 even when the operating knob 75 restricts the operation of the lid operator 68 as depicted in Fig. 14. If the key 65 is inadvertently left inside the storage member 52 in this case, the "locked state" cannot be canceled and what is called a state of the key 65 being locked in results. This necessitates the use of, for example, a spare key before the lid 61 can be opened. In the present embodiment, the second abutment portion 79b restricts movement of the link member 72, so that the state of the key 65 being locked in can be avoided.

Under a condition in which the restriction on the operation of the lid operator 68 by the operating knob 75 is released as depicted in Fig. 11, the stopper portion 79 of the operating knob 75 is spaced inferiorly apart from the engagement portion 72d of the link member 72 and the engagement between the second abutment portion 79b and the engagement portion 72d of the link member 72 is released. Under this condition, the link member 72 can slide.

Fig. 15 is a perspective view of the storage member 52, as viewed from an anterior side.

A backrest 92 is provided on a front surface 60a of the case 60 of the storage member 52. The backrest 92 serves as a support for a back of the passenger seated in the rear seat 14b. The backrest 92 is formed of an elastic member offering a cushioning property.

The backrest 92 is a rectangular plate-shaped member having a length longer in the vehicle width direction than in the vertical direction. The backrest 92 is mounted at an upper portion of the front surface 60a such that a wall thickness direction thereof is oriented toward the vehicle fore-aft direction.

The backrest 92 has an airflow path 93. The airflow path 93 allows air through the motorcycle 1 to flow through the inside of the backrest 92.

The airflow path 93 includes a pair of left and right vertical airflow passages 93a. The vertical airflow passages 93a each pass through the backrest 92 from an upper surface to a lower surface thereof. The vertical airflow passages 93a are disposed at a central portion in the vehicle width direction of the backrest 92.

The airflow path 93 further includes a pair of lateral airflow passages 93b. The lateral airflow passages 93b each extend from a vertical intermediate portion of each of the vertical airflow passages 93a toward the outside in the vehicle width direction, thus communicating with a corresponding outer side of the backrest 92.

When the motorcycle 1 is ridden having no passenger seated in the rear seat 14b, part of airflows W flowing over the front surface 60a of the storage member 52 and therearound flows vertically through the vertical airflow passages 93a and flows from the vertical airflow passages 93a to the lateral airflow passages 93b onto the outside in the vehicle width direction. The airflows W can thereby smoothly flow on the side of the front surface 60a of the storage member 52, so that riding performance of the motorcycle 1 can be enhanced.

Even with the front surface 60a shaped flatly, the airflow path 93 can ensure a smooth flow of the airflows W. The front surface 60a of the storage member 52 is thus flatly shaped to provide a large capacity of the storage member 52.

Fig. 16 is a perspective view of the mounting base 51 and a second storage member 152, which is different from the storage member 52.

The second storage member 152 includes a claw-shaped engagement portion 154a at a center in the vehicle width direction at a front portion on a lower surface of the second storage member 152. The engagement portion 154a protrudes anteriorly.

The second storage member 152 further includes a claw-shaped movable engagement portion 154b at a central portion in the vehicle width direction on the lower surface of the second storage member 152. The movable engagement portion 154b protrudes posteriorly. The movable engagement portion 154b is located posterior to the engagement portion 154a and is slidable in the vehicle fore-aft direction by an operation by the user.

The second storage member 152 is placed on the upper surface of the mounting base 51 and fixed to the mounting base 51 by the engagement portion 154a engaging the central engagement hole 51c and the movable engagement portion 154b engaging the rear portion engagement hole 51b. The use of the central engagement hole 51c enables the second storage member 152, which is different from the storage member 52, to be mounted on the mounting base 51.

As described above, in accordance with the embodiment to which the present invention is applied, the storage unit structure for the motorcycle 1 includes the box-shaped storage member 52, which is removably mounted on the rear carrier 50 on the vehicle body side, and the key cylinder 66, which is disposed in the storage member 52 and rotationally operated. The locked state and the unlocked state of the storage member 52 with respect to the rear carrier 50 are switched through the operation of the key cylinder 66. The storage unit structure includes: the lid operator 68, which operates to open or close the lid 61 of the storage member 52; the operating knob 75, which serves as the open/close control mechanism that imposes or releases the restriction on the opening or closing of the lid 61 by the lid operator 68; and the first link mechanism 85, which serves as the open/close control mechanism operation restriction portion that imposes or releases restriction on the operation of the operating knob 75. The state of restriction on the operation of the operating knob 75 by the first link mechanism 85 is switched in response to the operation of the key cylinder 66.

Through the foregoing configuration, under a condition in which the restriction on the operation of the operating knob 75 by the first link mechanism 85 is released through the operation of the key cylinder 66, operating the operating knob 75 allows the restriction on the opening or closing of the lid 61 by the lid operator 68 to be set to be either imposed or released. Thus, only the restriction on the opening or closing of the lid 61 can be switched independently of switching of the locked state of the storage member 52 with respect to the mounting base 51 through the operation of the key cylinder 66. Under a condition in which the restriction on the opening or closing of the lid 61 by the lid operator 68 is released, the lid 61 can be opened or closed without an operation of the key cylinder 66, which facilitates the operation to open or close the lid 61. Additionally, the state of restriction on the operating knob 75 by the first link mechanism 85 is switched in response to the operation of the key cylinder 66. This, for example, eliminates the need for a rotary operator dedicated to switching of the state of restriction on the operating knob 75. This contributes to a simplified structure.

When the storage member 52 is in the "locked state" through the operation of the key cylinder 66, the first link mechanism 85 restricts the operation of the operating knob 75. When the storage member 52 is in the "unlocked state" through the operation of the key cylinder 66, the first link mechanism 85 releases the restriction on the operation of the operating knob 75.

Through the foregoing configuration, the operation of the operating knob 75 is restricted when the storage member 52 is in the "locked state" and the restriction on the operation of the operating knob 75 is released when the storage member 52 is in the "unlocked state." The user can intuitively operate the "locked state" of the storage member 52 and the operating knob 75 and gains operability.

The operating knob 75 is rotationally operated, the operating knob 75 includes the lid operation restriction portion 78 that restricts the operation by the lid operator 68, and the rotational operation of the operating knob 75 is restricted by the stopper portion 79 provided in the operating knob 75 abutting on the first link mechanism 85.

Through the foregoing configuration, the opening or closing of the lid 61 by the lid operator 68 can be restricted by a simple structure of the lid operation restriction portion 78 of the rotationally operated operating knob 75. Additionally, the rotational operation of the operating knob 75 can be restricted by a simple structure of the first link mechanism 85 being brought into abutment with the stopper portion 79 of the operating knob 75.

The operation restriction portion is the first link mechanism 85 that extends from the key cylinder 66, and the first link mechanism 85 moves with an operation of the key cylinder 66 to thereby impose or release restriction on the operation of the operating knob 75.

Through the foregoing configuration, the restriction on the operation of the operating knob 75 can be imposed or released by a simple structure of the first link mechanism 85 that moves with the operation of the key cylinder 66.

Additionally, the first link mechanism 85 extends from the key cylinder 66 superiorly toward the operating knob 75.

Through the foregoing configuration, the first link mechanism 85 can be compactly provided.

In addition, the storage unit structure further includes: the fixing operator 67 that operates for fixing of the storage member 52 with respect to the mounting base 51 and for releasing the fixing of the storage member 52 with respect to the mounting base 51, restriction on the operation of the fixing operator 67 being imposed in the "locked state" and the restriction on the operation of the fixing operator 67 being released in the "unlocked state"; and the second link mechanism 86 that extends from the key cylinder 66, the second link mechanism 86 moving through the operation of the key cylinder 66. The second link mechanism 86 imposes restriction on the operation of the fixing operator 67 in the "locked state" and leaves the fixing operator 67 to thereby release the restriction on the operation of the fixing operator 67 in the "unlocked state."

Through the foregoing configuration, the restriction on the operation of the fixing operator 67 can be imposed or released by a simple structure of the second link mechanism 86 that moves through the operation of the key cylinder 66.

The second link mechanism 86 extends from the key cylinder 66 in the vehicle width direction toward the fixing operator 67.

Through the foregoing configuration, the second link mechanism 86 can be compactly provided.

The storage unit structure further includes the engagement member 73 that engages the engaged portion 61a of the lid 61 to thereby maintain the lid 61 in a closed position; and the link member 72 connected with the engagement member 73 and disposed to be movable in the vehicle width direction. When the link member 72 is moved through the operation of the lid operator 68, the engagement member 73 moves to thereby release the engagement between the engaged portion 61a and the engagement member 73.

Through the foregoing configuration, the link member 72 is moved by the operation of the lid operator 68, which moves the engagement member 73 to thereby release the engagement between the engaged portion 61a of the lid 61 and the engagement member 73. Thus, the lid 61 can be operated to be opened or closed through a simple structure.

The storage member 52 includes the case 60 and the lid 61 that closes the opening in the upper surface of the case 60, and the engagement member 73 is disposed on the side of the case 60 and at least a part of the engagement member 73 is housed in the case 60.

Through the foregoing configuration, the engagement member 73 can be prevented from protruding toward the lid 61 side, which enhances ease of use of the storage member 52. It is noted that, while the engagement member 73 is generally housed in the case 60 in the embodiment, an upper end portion of the engagement member 73 may protrude superiorly from the case 60.

The engagement member 73 is urged by the urging member 74 in the direction in which the engagement member 73 engages the engaged portion 61a, the lid operator 68 depresses the link member 72 via the depression portion 68b to thereby resist the urging force of the urging member 74 and move the engagement member 73 via the link member 72, and the link member 72 has the clearance portion 72c to clear the depression portion 68b that moves when the engaged portion 61a is engaged by the engagement member 73 and the lid 61 is closed.

Through the foregoing configuration, the clearance portion 72c of the link member 72 can clear the engaged portion 61a, which is moved when the engaged portion 61a is engaged by the engagement member 73 and the lid 61 is closed, so that the movement of the link member 72 operatively associated with the engagement member 73 is not transmitted to the lid operator 68. Thus, the lid 61 can be closed even with a small force.

Additionally, the operating knob 75 includes the second abutment portion 79b that can engage the link member 72, and, under a condition in which restriction on opening or closing of the lid 61 by the lid operator 68 is released, the operating knob 75 is spaced away from the link member 72 and, under a condition in which the restriction on the opening or closing of the lid 61 by the lid operator 68 is imposed, the second abutment portion 79b engages the link member 72 to thereby restrict movement of the link member 72.

Through the foregoing configuration, under the condition in which the restriction on the opening or closing of the lid 61 by the lid operator 68 is imposed by the operating knob 75, the second abutment portion 79b engages the link member 72 and the movement of the link member 72 is restricted, so that the movement of the engagement member 73 is also restricted and the lid 61 cannot be closed. Thus, under the condition in which the restriction on the opening or closing of the lid 61 by the lid operator 68 is imposed by the operating knob 75, the lid 61 can be prevented from being closed.

Additionally, the backrest 92 for a passenger is disposed on the front surface 60a of the storage member 52. The backrest 92 has the airflow path 93 that allows air W to flow through the inside of the backrest 92.

Through the foregoing configuration, the air W can smoothly flow through the area around the backrest 92, so that riding performance of the motorcycle 1 can be enhanced.

It should be clearly understood that the embodiment of the invention described above is illustrative only and is not intended to limit the scope of the invention which is defined by the appended claims.

The key cylinder 66, which exemplifies the rotary operator that switches between the locked state and the unlocked state of the storage member 52 with respect to the vehicle body in the embodiment described above, is illustrative only and not limiting. The rotary operator may, for example, be such that restriction on a rotational operation is imposed or released by an authentication system that incorporates a smart key. In this case, communication is performed between the smart key carried by the user and a controller of the motorcycle 1 and, when a signal transmitted by the smart key is authenticated by the controller, restriction on the operation of the rotary operator is released and the rotary operator can now be operated.

The configuration of the embodiment described above, in which the storage member 52 is mounted via the mounting base 51 on the rear carrier 50 as the vehicle body side, is illustrative only and not limiting. The storage member 52 may even be mounted directly on the vehicle body such as the rear carrier.

Additionally, the configuration of the embodiment described above, in which the key cylinder 66 imposes or releases restriction on the operation of the fixing operator 67 via the second link mechanism 86, is illustrative only and not limiting. A possible arrangement may, for example, be such that an operation of the key cylinder 66 directly operates the movable engagement portion 54b. In this case, the "locked state" of the storage member 52 means a condition in which the storage member 52 is fixed by the movable engagement portion 54b to the vehicle body and the "unlocked state" of the storage member 52 means a condition in which the fixing of the storage member 52 by the movable engagement portion 54b to the vehicle body is released.

In addition, the saddle riding vehicle, which being exemplified by the motorcycle 1 in the embodiment, may still be a three-wheel saddle riding vehicle including two front wheels or two rear wheels, or may even be a saddle riding vehicle including four or more wheels.

To achieve, in a storage unit structure for a saddle riding vehicle, a simple structure for solely switching restriction on opening or closing of a lid for a storage member independently of switching a locked state of the storage member.

### [Solving Means]

In a storage unit structure for a saddle riding vehicle including a box-shaped storage member 52 removably mounted on a vehicle body side and a key cylinder 66 that is disposed in the storage member 52 and that is rotationally operated, in which a locked state and an unlocked state of the storage member 52 with respect to the vehicle body side are switched through an operation of the key cylinder 66, the storage unit structure includes: a lid operator 68 that operates to open or close a lid 61 of the storage member 52; an operating knob 75 that imposes or releases restriction on opening or closing of the lid 61 by the lid operator 68; and a first link mechanism 85 that imposes or releases restriction on the operation of the operating knob 75. A state of restriction on the operating knob 75 by the first link mechanism 85 is switched in response to an operation of the key cylinder 66.

### [Description of Reference Symbols]

1 Motorcycle (saddle riding vehicle)
50 Rear carrier (vehicle body)
52 Storage member
60 Case
60a Front surface
61 Lid
61a Engaged portion
66 Key cylinder (rotary operator)
67 Fixing operator
68 Lid operator
68b Depression portion
72 Link member
72c Clearance portion
73 Engagement member
74 Urging member
75 Operating knob (open/close control mechanism)
78 Lid operation restriction portion
79 Stopper portion
79b Second abutment portion (movement restriction portion)
85 First link mechanism (open/close control mechanism operation restriction portion)
86 Second link mechanism
92 Backrest
93 Airflow path

## Claims

1. A storage unit structure for a saddle riding vehicle, including a box-shaped storage member (52) removably disposed on a side of a vehicle body (50) and a rotary operator (66) that is disposed in the storage member (52) and that is rotationally operated, in which a locked state and an unlocked state of the storage member (52) with respect to the side of the vehicle body (50) are switched through an operation of the rotary operator (66), the storage unit structure comprising:
a lid operator (68) that operates to open or close a lid (61) of the storage member (52);
an open/close control mechanism (75) that imposes or releases restriction on opening or closing of the lid (61) by the lid operator (68); and
an open/close control mechanism operation restriction portion (85) that imposes or releases restriction on an operation of the open/close control mechanism (75), wherein
a state of restriction on the open/close control mechanism (75) by the open/close control mechanism operation restriction portion (85) is switched in response to the operation of the rotary operator (66); **characterized in that**
the open/close control mechanism (75) includes an operating knob (75) that is rotationally operated,
the operating knob (75) includes a lid operation restriction portion (78) that restricts an operation by the lid operator (68), and
the rotational operation of the operating knob (75) is restricted by a stopper portion (79) provided in the operating knob (75) abutting on the open/close control mechanism operation restriction portion (85).

2. The storage unit structure for a saddle riding vehicle according to claim 1, wherein
when the storage member (52) is in the locked state through an operation of the rotary operator (66), the open/close control mechanism operation restriction portion (85) restricts an operation of the open/close control mechanism (75), and
when the storage member (52) is in the unlocked state through an operation of the rotary operator (66), the open/close control mechanism operation restriction portion (85) releases restriction on the operation of the open/close control mechanism (75).

3. The storage unit structure for a saddle riding vehicle according to any one of claims 1 to 2, wherein
the open/close control mechanism operation restriction portion (85) is a first link mechanism (85) that extends from the rotary operator (66), and
the first link mechanism (85) moves with the operation of the rotary operator (66) to impose or release restriction on an operation of the open/close control mechanism (75).

4. The storage unit structure for a saddle riding vehicle according to claim 3, wherein
the first link mechanism (85) extends from the rotary operator (66) superiorly toward the open/close control mechanism (75).

5. The storage unit structure for a saddle riding vehicle according to any one of claims 1 to 4, further comprising:
a fixing operator (67) that operates for fixing of the storage member (52) with respect to the side of the vehicle body (50) and for releasing the fixing of the storage member (52) with respect to the side of the vehicle body (50), restriction on an operation of the fixing operator (67) being imposed in the locked state and the restriction on the operation of the fixing operator (67) being released in the unlocked state; and
a second link mechanism (86) that extends from the rotary operator (66), the second link mechanism (86) moving through an operation of the rotary operator (66), wherein
the second link mechanism (86) imposes restriction on an operation of the fixing operator (67) in the locked state and the second link mechanism (86) leaves the fixing operator (67) to release the restriction on the operation of the fixing operator (67) in the unlocked state.

6. The storage unit structure for a saddle riding vehicle according to claim 5, wherein
the second link mechanism (86) extends from the rotary operator (66) in a vehicle width direction toward the fixing operator (67).

7. The storage unit structure for a saddle riding vehicle according to any one of claims 1 to 6, further comprising:
an engagement member (73) that engages an engaged portion (61a) of the lid (61) to maintain the lid (61) in a closed position; and
a link member (72) connected with the engagement member (73) and disposed to be movable in the vehicle width direction, wherein
when the link member (72) is moved through an operation of the lid operator (68), the engagement member (73) moves to release engagement between the engaged portion (61a) and the engagement member (73).

8. The storage unit structure for a saddle riding vehicle according to claim 7, wherein
the storage member (52) includes a case (60) and the lid (61) that closes an opening in an upper surface of the case (60), and
the engagement member (73) is disposed on a side of the case (60) and at least a part of the engagement member (73) is housed in the case (60).

9. The storage unit structure for a saddle riding vehicle according to claim 7 or 8, wherein
the engagement member (73) is urged by an urging member (74) in a direction in which the engagement member (73) engages the engaged portion (61a),
the lid operator (68) depresses the link member (72) via a depression portion (68b) to resist an urging force of the urging member (74) and move the engagement member (73) via the link member (72), and
the link member (72) has a clearance portion (72c) to clear the depression portion (68b) that moves when the engaged portion (61a) is engaged by the engagement member (73) and the lid (61) is closed.

10. The storage unit structure for a saddle riding vehicle according to any one of claims 7 to 9, wherein
the open/close control mechanism (75) includes a movement restriction portion (79b) that is possible to engage the link member (72), and
under a condition in which restriction on opening or closing of the lid (61) by the lid operator (68) is released, the open/close control mechanism (75) is spaced away from the link member (72) and, under the condition in which the restriction on the opening or closing of the lid (61) by the lid operator (68) is imposed, the movement restriction portion (79b) engages the link member (72) to restrict movement of the link member (72).

11. The storage unit structure for a saddle riding vehicle according to any one of claims 1 to 10, further comprising:
a backrest (92) for a passenger, disposed on a front surface (60a) of the storage member (52), wherein
the backrest (92) has an airflow path (93) that allows air to flow through an inside of the backrest (92).

## Patentansprüche

1. Aufbewahrungseinheitsstruktur für ein Sattelaufsitzfahrzeug, umfassend ein kastenförmiges Aufbewahrungselement (52), das abnehmbar an einer Seite eines Fahrzeugkörpers (50) angeordnet ist, und eine Drehbetätigungsvorrichtung (66), die in dem Aufbewahrungselement (52) angeordnet ist und die drehend betätigt wird, wobei ein verriegelter Zustand und ein unverriegelter Zustand des Aufbewahrungselements (52) in Bezug auf die Seite des Fahrzeugkörpers (50) durch eine Betätigung der Drehbetätigungsvorrichtung (66) umgeschaltet werden, wobei die Aufbewahrungseinheitsstruktur umfasst:
einen Deckelbetätiger (68), der zum Öffnen oder Schließen eines Deckels (61) des Aufbewahrungselements (52) arbeitet;
einen Öffnungs-/Schließ-Steuermechanismus (75), der eine Beschränkung des Öffnens oder Schließens des Deckels (61) durch den Deckelbetätiger (68) auferlegt oder aufhebt; und
einen Öffnungs-/Schließ-Steuermechanismus-Betätigungsbeschränkungsabschnitt (85), der eine Beschränkung auf einen Betrieb des Öffnungs-/Schließ-Steuermechanismus (75) auferlegt oder aufhebt, wobei
ein Zustand der Beschränkung des Öffnungs-/Schließ-Steuermechanismus (75) durch den Öffnungs-/Schließ-Steuermechanismus-Betätigungsbeschränkungsabschnitt (85) in Reaktion auf die Betätigung der Drehbetätigungsvorrichtung (66) umgeschaltet wird; **dadurch gekennzeichnet, dass**
der Öffnungs-/Schließ-Steuermechanismus (75) einen Betätigungsknopf (75) umfasst, der drehend betätigt wird,
der Betätigungsknopf (75) einen Deckel-Betätigungsbeschränkungsabschnitt (78) umfasst, der eine Betätigung durch den Deckelbetätiger (68) beschränkt, und
die Drehbetätigung des Betätigungsknopfes (75) durch einen Stopperabschnitt (79) begeschränkt wird, der in dem Betätigungsknopf (75) vorgesehen ist und an dem Öffnungs-/Schließ-Steuermechanismus-Betätigungsbeschränkungsabschnitt (85) anliegt.

2. Aufbewahrungseinheitsstruktur für ein Sattelaufsitzfahrzeug nach Anspruch 1, wobei
wenn sich das Aufbewahrungselement (52) durch eine Betätigung der Drehbetätigungsvorrichtung (66) in dem verriegelten Zustand befindet, der Öffnungs-/Schließ-Steuermechanismus-Betätigungsbeschränkungsabschnitt (85) einen Betrieb des Öffnungs-/Schließ-Steuermechanismus (75) beschränkt, und
wenn sich das Aufbewahrungselement (52) durch eine Betätigung der Drehbetätigungsvorrichtung (66) in dem entriegelten Zustand befindet, der Öffnungs-/Schließ-Steuermechanismus-Betätigungsbeschränkungsabschnitt (85) die Beschränkung des Betriebs des Öffnungs-/Schließ-Steuermechanismus (75) aufhebt.

3. Aufbewahrungseinheitsstruktur für ein Sattelaufsitzfahrzeug nach einem der Ansprüche 1 bis 2, wobei
der Öffnungs-/Schließ-Steuermechanismus-Betätigungsbeschränkungsabschnitt (85) ein erster Verbindungsmechanismus (85) ist, der sich von dem Drehbetätigungsvorrichtung (66) erstreckt, und
sich der erste Verbindungsmechanismus (85) mit der Betätigung der Drehbetätigungsvorrichtung (66) bewegt, um eine Beschränkung einer Betätigung des Öffnungs-/Schließ-Steuermechanismus (75) aufzuerlegen oder aufzuheben.

4. Aufbewahrungseinheitsstruktur für ein Sattelaufsitzfahrzeug nach Anspruch 3, wobei
sich der erste Verbindungsmechanismus (85) von der Drehbetätigungsvorrichtung (66) nach oben in Richtung des Öffnungs-/Schließ-Steuermechanismus (75) erstreckt.

5. Aufbewahrungseinheitsstruktur für ein Sattelaufsitzfahrzeug nach einem der Ansprüche 1 bis 4, ferner umfassend:
eine Fixierbetätigungsvorrichtung (67), die zum Fixieren des Aufbewahrungselements (52) in Bezug auf die Seite des Fahrzeugkörpers (50) und zum Lösen der Fixierung des Aufbewahrungselements (52) in Bezug auf die Seite des Fahrzeugkörpers (50) betätigt wird, wobei eine Beschränkung einer Betätigung der Fixierbetätigungsvorrichtung (67) in dem verriegelten Zustand auferlegt wird und die Beschränkung der Betätigung der Fixierbetätigungsvorrichtung (67) in dem entriegelten Zustand gelöst wird; und
einen zweiten Verbindungsmechanismus (86), der sich von der Drehbetätigungsvorrichtung (66) erstreckt, wobei sich der zweite Verbindungsmechanismus (86) durch eine Betätigung der Drehbetätigungsvorrichtung (66) bewegt, wobei
der zweite Verbindungsmechanismus (86) einer Betätigung der Fixierbetätigungsvorrichtung (67) in dem verriegelten Zustand eine Beschränkung auferlegt und der zweite Verbindungsmechanismus (86) die Fixierbetätigungsvorrichtung (67) verlässt, um die Beschränkung der Fixierbetätigungsvorrichtung (67) in dem entriegelten Zustand aufzuheben.

6. Aufbewahrungseinheitsstruktur für ein Sattelaufsitzfahrzeug nach Anspruch 5, wobei
sich der zweite Verbindungsmechanismus (86) von der Drehbetätigungsvorrichtung (66) in einer Fahrzeugbreitenrichtung zu der Fixierbetätigungsvorrichtung (67) erstreckt.

7. Aufbewahrungseinheitsstruktur für ein Sattelaufsitzfahrzeug nach einem der Ansprüche 1 bis 6, ferner umfassend:
ein Eingriffselement (73), das in einen Eingriffsabschnitt (61a) des Deckels (61) eingreift, um den Deckel (61) in einer geschlossenen Position zu halten; und
ein Verbindungselement (72), das mit dem Eingriffselement (73) verbunden und derart angeordnet ist, dass es in der Fahrzeugbreitenrichtung beweglich ist, wobei, wenn das Verbindungselement (72) durch eine Betätigung des Deckelbetätigers (68) bewegt wird, sich das Eingriffselement (73) bewegt, um den Eingriff zwischen dem Eingriffsabschnitt (61a) und dem Eingriffselement (73) zu lösen.

8. Aufbewahrungseinheitsstruktur für ein Sattelaufsitzfahrzeug nach Anspruch 7, wobei
das Aufbewahrungselement (52) ein Gehäuse (60) und den Deckel (61) umfasst, der eine Öffnung in einer oberen Fläche des Gehäuses (60) verschließt, und
das Eingriffselement (73) an einer Seite des Gehäuses (60) angeordnet ist und wenigstens ein Teil des Eingriffselements (73) in dem Gehäuse (60) aufgenommen ist.

9. Aufbewahrungseinheitsstruktur für ein Sattelaufsitzfahrzeug nach Anspruch 7 oder 8, wobei
das Eingriffselement (73) durch ein Druckelement (74) in eine Richtung gedrückt wird, in der das Eingriffselement (73) in den Eingriffsabschnitt (61a) eingreift,
der Deckelbetätiger (68) das Verbindungselement (72) über einen Niederdrückabschnitt (68b) niederdrückt, um einer Druckkraft des Druckelements (74) zu widerstehen und das Eingriffselement (73) über das Verbindungselement (72) zu bewegen, und
das Verbindungselement (72) einen Freiraumabschnitt (72c) aufweist, um den Vertiefungsabschnitt (68b) freizugeben, der sich bewegt, wenn der Eingriffsabschnitt (61a) mit dem Eingriffselement (73) in Eingriff ist und der Deckel (61) geschlossen ist.

10. Aufbewahrungseinheitsstruktur für ein Sattelaufsitzfahrzeug nach einem der Ansprüche 7 bis 9, wobei
der Öffnungs-/Schließ-Steuermechanismus (75) einen Bewegungsbeschränkungsabschnitt (79b) aufweist, der mit dem Verbindungselement (72) in Eingriff gelangen kann, und
der Öffnungs-/Schließ-Steuermechanismus (75) in einem Zustand, in dem die Beschränkung des Öffnens oder Schließens des Deckels (61) durch den Deckelbetätiger (68) aufgehoben ist, zu dem Verbindungselement (72) beabstandet ist, und der Bewegungsbeschränkungsabschnitt (79b) in dem Zustand, in dem die Beschränkung des Öffnens oder Schließens des Deckels (61) durch den Deckelbetätiger (68) auferlegt ist, mit dem Verbindungselement (72) in Eingriff kommt, um die Bewegung des Verbindungselements (72) zu beschränken.

11. Aufbewahrungseinheitsstruktur für ein Sattelaufsitzfahrzeug nach einem der Ansprüche 1 bis 10, ferner umfassend
eine Rückenlehne (92) für einen Fahrgast, die an einer vorderen Fläche (60a) des Aufbewahrungselements (52) angeordnet ist, wobei
die Rückenlehne (92) einen Luftstrompfad (93) aufweist, der es ermöglicht, dass Luft durch eine Innenseite der Rückenlehne (92) strömt.

## Revendications

1. Structure d'unité de rangement pour un véhicule à selle, comprenant un élément de rangement en forme de boîte (52) disposé de manière amovible sur un côté d'un corps de véhicule (50) et un opérateur rotatif (66) qui est disposé dans l'élément de rangement (52) et qui est actionné par rotation, dans lequel un état verrouillé et un état déverrouillé de l'élément de rangement (52) par rapport au côté du corps de véhicule (50) sont commutés par une opération de l'opérateur rotatif (66), la structure d'unité de rangement comprenant :
un opérateur de couvercle (68) qui fonctionne pour ouvrir ou fermer un couvercle (61) de l'élément de rangement (52) ;
un mécanisme de commande d'ouverture/fermeture (75) qui impose ou libère une restriction sur l'ouverture ou la fermeture du couvercle (61) par l'opérateur de couvercle (68) ; et
une partie de restriction d'opération du mécanisme de commande d'ouverture/fermeture (85) qui impose ou libère une restriction sur une opération du mécanisme de commande d'ouverture/fermeture (75), dans laquelle un état de restriction sur le mécanisme de commande d'ouverture/fermeture (75) par la partie de restriction d'opération du mécanisme de commande d'ouverture/fermeture (85) est commuté en réponse à l'opération de l'opérateur rotatif (66) ; **caractérisé en ce que**
le mécanisme de commande d'ouverture/fermeture (75) comprend un bouton de commande (75) qui est actionné par rotation,
le bouton de commande (75) comprend une partie de restriction d'opération du couvercle (78) qui restreint une opération par l'opérateur du couvercle (68), et
l'opération en rotation du bouton de commande (75) est restreinte par une partie d'arrêt (79) prévue dans le bouton de commande (75) venant en butée sur la partie de restriction d'opération du mécanisme de commande d'ouverture/fermeture (85).

2. Structure d'unité de rangement pour un véhicule à selle selon la revendication 1, dans laquelle
lorsque l'élément de rangement (52) est dans l'état verrouillé par une opération de l'opérateur rotatif (66), la partie de restriction d'opération du mécanisme de commande d'ouverture/fermeture (85) restreint une opération du mécanisme de commande d'ouverture/fermeture (75), et
lorsque l'élément de rangement (52) est dans l'état déverrouillé par une opération de l'opérateur rotatif (66), la partie de restriction d'opération du mécanisme de commande d'ouverture/fermeture (85) libère la restriction sur l'opération du mécanisme de commande d'ouverture/fermeture (75).

3. Structure d'unité de rangement pour un véhicule à selle selon l'une des revendications 1 à 2, dans laquelle
la partie de restriction d'opération du mécanisme de commande d'ouverture/fermeture (85) est un premier mécanisme de liaison (85) qui s'étend depuis l'opérateur rotatif (66), et
le premier mécanisme de liaison (85) se déplace avec l'opération de l'opérateur rotatif (66) pour imposer ou libérer une restriction sur une opération du mécanisme de commande d'ouverture/fermeture (75).

4. Structure d'unité de rangement pour un véhicule à selle selon la revendication 3, dans laquelle
le premier mécanisme de liaison (85) s'étend depuis l'opérateur rotatif (66) de manière supérieure vers le mécanisme de commande d'ouverture/fermeture (75).

5. Structure d'unité de rangement pour un véhicule à selle selon l'une des revendications 1 à 4, comprenant en outre :
un opérateur de fixation (67) qui fonctionne pour fixer l'élément de rangement (52) par rapport au côté du corps de véhicule (50) et pour libérer la fixation de l'élément de rangement (52) par rapport au côté du corps de véhicule (50), une restriction sur une opération de l'opérateur de fixation (67) étant imposée dans l'état verrouillé et la restriction sur l'opération de l'opérateur de fixation (67) étant libérée dans l'état déverrouillé ; et
un deuxième mécanisme de liaison (86) qui s'étend à partir de l'opérateur rotatif (66), le deuxième mécanisme de liaison (86) se déplaçant par le biais d'une opération de l'opérateur rotatif (66), dans lequel
le deuxième mécanisme de liaison (86) impose une restriction sur une opération de l'opérateur de fixation (67) dans l'état verrouillé et le deuxième mécanisme de liaison (86) quitte l'opérateur de fixation (67) pour libérer la restriction sur l'opération de l'opérateur de fixation (67) dans l'état déverrouillé.

6. Structure d'unité de rangement pour un véhicule à selle selon la revendication 5, dans laquelle
le deuxième mécanisme de liaison (86) s'étend depuis l'opérateur rotatif (66) dans une direction de largeur du véhicule vers l'opérateur de fixation (67).

7. Structure d'unité de rangement pour un véhicule à selle selon l'une des revendications 1 à 6, comprenant en outre :
un élément d'engagement (73) qui s'engage avec une partie engagée (61a) du couvercle (61) pour maintenir le couvercle (61) dans une position fermée ; et
un élément de liaison (72) relié à l'élément d'engagement (73) et disposé pour être mobile dans la direction de la largeur du véhicule, dans lequel lorsque l'élément de liaison (72) est déplacé par une opération de l'opérateur de couvercle (68), l'élément d'engagement (73) se déplace pour libérer l'engagement entre la partie engagée (61a) et l'élément d'engagement (73).

8. Structure d'unité de rangement pour un véhicule à selle selon la revendication 7, dans laquelle
l'élément de rangement (52) comprend un boîtier (60) et le couvercle (61) qui ferme une ouverture dans une surface supérieure du boîtier (60), et
l'élément d'engagement (73) est disposé sur un côté du boîtier (60) et au moins une partie de l'élément d'engagement (73) est logée dans le boîtier (60).

9. Structure d'unité de rangement pour un véhicule à selle selon la revendication 7 ou 8, dans laquelle
l'élément d'engagement (73) est poussé par un élément de poussée (74) dans une direction dans laquelle l'élément d'engagement (73) engage la partie engagée (61a), l'opérateur de couvercle (68) enfonce l'élément de liaison (72) par l'intermédiaire d'une partie de dépression (68b) pour résister à une force de poussée de l'élément de poussée (74) et déplacer l'élément d'engagement (73) par l'intermédiaire de l'élément de liaison (72), et
l'élément de liaison (72) a une partie de dégagement (72c) pour dégager la partie de dépression (68b) qui se déplace lorsque la partie engagée (61a) est engagée par l'élément d'engagement (73) et le couvercle (61) est fermé.

10. Structure d'unité de rangement pour un véhicule à selle selon l'une des revendications 7 à 9, dans laquelle
le mécanisme de commande d'ouverture/fermeture (75) comprend une partie de restriction de mouvement (79b) qui peut s'engager avec l'élément de liaison (72), et dans une condition dans laquelle la restriction sur l'ouverture ou la fermeture du couvercle (61) par l'opérateur de couvercle (68) est libérée, le mécanisme de commande d'ouverture/fermeture (75) est espacé de l'élément de liaison (72) et, dans la condition dans laquelle la restriction sur l'ouverture ou la fermeture du couvercle (61) par l'opérateur de couvercle (68) est imposée, la partie de restriction de mouvement (79b) engage l'élément de liaison (72) pour restreindre le mouvement de l'élément de liaison (72).

11. Structure d'unité de rangement pour un véhicule à selle selon l'une des revendications 1 à 10, comprenant en outre :
un dossier (92) pour un passager, disposé sur une surface avant (60a) de l'élément de rangement (52), dans lequel
le dossier (92) a un chemin d'écoulement d'air (93) qui permet à l'air de circuler à travers un intérieur du dossier (92).
